# EUROPÄISCHE PATENTSCHRIFT

(11) **EP 3 260 237 B1**
(45) Veröffentlichungstag und Bekanntmachung des Hinweises auf die Patenterteilung: **12.01.2022**
(21) Anmeldenummer: 17000849.4
(22) Anmeldetag: 17.05.2017
(51) Int. Cl.: B25B 17/00, B25B 13/48, B25B 13/06

(54) **LANGSCHAFTIGES WERKZEUG, SYSTEM AUS EINEM LANGSCHAFTIGEN WERKZEUG MIT EINEM ERSTEN MANIPULATOR UND EINEM ZWEITEN MANIPULATOR SOWIE VERWENDUNG FÜR EIN DERARTIGES WERKZEUG UND EIN DERARTIGES SYSTEM**
LONG-SHAFTED TOOL, SYSTEM CONSISTING OF A LONG-SHAFTED TOOL WITH A FIRST MANIPULATOR AND A SECOND MANIPULATOR AND USE FOR SUCH A TOOL AND SUCH A SYSTEM
OUTIL À TIGE LONGUE, SYSTÈME COMPRENANT UN OUTIL À TIGE LONGUE AYANT UN PREMIER MANIPULATEUR ET UN SECOND MANIPULATEUR ET UTILISATION D'UN TEL OUTIL ET D'UN TEL SYSTÈME

(30) Priorität: 19.05.2016 DE 102016006068
(43) Veröffentlichungstag der Anmeldung: 27.12.2017
(73) Patentinhaber: Scotland Gas Networks PLC, Newbridge, Edinburgh EH28 8TG (GB); Southern Gas Networks PLC, Horley, Surrey RH6 9HJ (GB)
(72) Erfinder: Koch, Elmar, 59889 Eslohe (DE); Klein, Tobias, 57399 Kirchhundem (DE); Hanses, Andreas Joachim, 57368 Lennestadt (DE); Köper, Martin, 57439 Attendorn (DE)
(74) Vertreter: Tilmann, Max Wilhelm

(56) Entgegenhaltungen:
- EP-A2- 2 040 886
- CA-A1- 2 454 955
- US-A- 4 218 940
- US-B1- 8 065 938

## Beschreibung

Die Erfindung betrifft ein langschaftiges Werkzeug mit einem sich entlang einer Längsachse erstreckenden Schaft mit einem Griff an einem ersten Ende des Schafts und einem dem ersten Ende gegenüberliegenden zweiten Ende mit einer Aufnahme für einen Manipulator sowie ein System mit einem derartigen langschaftigen Werkzeug und einem ersten Manipulator und einem zweiten Manipulator, wie auch eine Verwendung für ein derartiges Werkzeug oder ein derartiges System.

Aus US 7,347,124 B1 ist beispielsweise ein langschaftiges Werkzeug mit einem dort als "longitudinal housing 47" bezeichneten, sich entlang einer Längsachse erstreckenden Schaft bekannt. Das dort beschriebene langschaftige Werkzeug weist einen Griff in Form des dort mit dem Bezugszeichen 28 versehenen "tee handle" auf. Ferner weist das dort beschriebene langschaftige Werkzeug an einem zweiten, dem ersten Ende gegenüberliegenden Ende einen Manipulator in Form des mit dem Bezugszeichen 30 gekennzeichneten "tool" auf. Das in US 7,347,124 B1 beschriebene langschaftige Werkzeug wird zum Bearbeiten einer in einer Grube befindlichen Rohrleitung von der Erdoberfläche aus verwendet. Dabei ist es bei dem aus US 7,347,124 B1 bekannten langschaftigen Werkzeug nachteilig, dass nur eine Art der Manipulation, insbesondere der Bearbeitung der in der Grube befindlichen Rohrleitung mit dem Werkzeug vorgenommen werden kann, nämlich eine solche, bei der eine Manipulationsfläche um eine Rotationsachse bewegt wird, beispielsweise die Manipulationsfläche einer Bohrerspitze. Andere Arten der Manipulation, beispielsweise wie die eines Abschabens mit einem feststehenden Manipulator, sind bei dem aus US 7,347,124 B1 bekannten langschaftigen Werkzeug nicht möglich. Sollen derartige Manipulationen an der in der Grube befindlichen Rohrleitung von der Erdoberfläche aus durchgeführt werden, so muss der Bediener eine Vielzahl von langschaftigen Werkzeugen mitführen.

Aus US 4 218 940 A geht ein Werkzeug ähnlich einem Ratschenschlüssel hervor, welches einen Schaft und eine darin befindliche, von einem Griffenende aus drehbare Welle aufweist, welche über ein Kegelradgetriebe eine im rechten Winkel zum Schaft drehbar gelagerte Werkzeugaufnahme in Rotation versetzt. Die Werkzeugaufnahme zeigt eine Arretierkugel, welche ein aufgenommenes Werkzeug sichern kann und welche über ein kegelartiges Ende des Schaftes, welches einen federnd gelagerten Bolzen mit einer Aussparung bewegen kann, freigegeben werden kann.

Ferner zeigt die US 8 065 938 B1 ein Verlängerungswerkzeug zur Durchführung von Arbeiten an engen Stellen, wobei ein Ende der Antriebswelle mit einer Vielzahl von verschiedenen Asdaptern versehen werden kann. Die Welle kann mit einem federnd gelagerten Raststift, welcher sich radial zur Achse des Schaftes bewegen kann, an einem Werkzeug arretiert werden.

Aus EP 2 040 886 A2 ist ein Werkzeug nach dem Oberbegriff des Anspruchs 1 bekannt.

Vor diesem Hintergrund lag der Erfindung die Aufgabe zugrunde, ein langschaftiges Werkzeug zu schaffen, das die Art der Manipulationen, die mit dem langschaftigen Werkzeug durchgeführt werden können, erhöht.

Diese Aufgabe wird durch den Gegenstand des Anspruchs 1 gelöst. Vorteilhafte Ausführungsformen sind in den Unteransprüchen und der hier nachfolgenden Beschreibung wiedergegeben.

Die Erfindung geht von dem Grundgedanken aus, den Manipulator des Werkzeugs austauschbar zu gestalten, ihm aber zugleich einen festen Sitz zu geben, der das Übertragen hoher Kräfte, wie dies beispielsweise zum Anziehen von Schrauben mit einem Drehmoment oder zum Lösen festgebackener Schrauben notwendig ist, erlaubt, zugleich jedoch die Möglichkeit vorzusehen, eine Manipulationsfläche des Manipulators zu drehen.

Hierfür sieht das langschaftige Werkzeug an dem zweiten, dem ersten Ende gegenüberliegenden Ende eine Aufnahme für einen Manipulator vor. Die Aufnahme weist einen zum Eingriff mit einer Ausnehmung eines Manipulators vorgesehenen, vorstehenden Raststift auf, der aus der vorstehenden Position in eine zurückgezogene Position bewegt werden kann. Dieser Raststift ermöglicht ein festes Halten des Manipulators in der Aufnahme und somit das sichere Übertragen von Stoßkräften oder von Drehmomenten bei feststehendem Manipulator. Zugleich sieht das erfindungsgemäße langschaftige Werkzeug vor, dass die Aufnahme eine Kupplungshälfte zum Kuppeln mit einer Kupplungshälfte eines Manipulators aufweist, wobei die Kupplungshälfte drehbar relativ zu einem Grundkörper des Schafts ist. Das Vorsehen einer derartigen Kupplungshälfte, die drehbar relativ zum Grundkörper ist, ermöglicht es, die Kupplungshälfte zu drehen, ohne den Grundkörper zu drehen. Dies bietet den Vorteil, dass der Grundkörper und ein von der Aufnahme des Schafts aufgenommener Manipulator in einer von dem Benutzer gewünschten Lage festgehalten werden, während eine Manipulationsfläche, die in einer bevorzugten Ausführungsform gegenüber anderen Teilen des Manipulators drehbar ausgeführt sein kann, gedreht werden kann, ohne diese von dem Benutzer gewünschte Ausrichtung der übrigen Teile des Manipulators und des Grundkörpers zu ändern.

Durch das Vorsehen einer Aufnahme für den Manipulator und die Ausbildung der Aufnahme mit dem zum Eingriff mit einer Ausnehmung eines Manipulators vorgesehenen, vorstehenden Raststift, der aus der vorstehenden Position in eine zurückgezogenen Position bewegt werden kann, wird bei dem erfindungsgemäßen langschaftigen Werkzeug die Möglichkeit geschaffen, den Manipulator einfach auszutauschen. Dadurch kann das erfindungsgemäße System geschaffen werden, bei dem in einem ersten Systemzustand ein erster Manipulator von der Aufnahme aufgenommen wird und in einem zweiten Systemzustand ein zweiter Manipulator anstelle des ersten Manipulators von der Aufnahme aufgenommen wird. Einem Werkzeugkasten gleich mit unterschiedlichen Werkzeugspitzen wird es dem Bediener mit dem erfindungsgemäßen System somit möglich, unter Rückgriff auf einen einzigen Schaft eine Mehrzahl von Manipulationstätigkeiten vorzunehmen. Insbesondere im Hinblick auf die Länge des Schafts bietet dies auch Transportvorteile. Der Bediener braucht lediglich einen langen Schaft mit an die Baustelle zu nehmen, sowie separat davon die Manipulatoren für die von ihm gewünschten Bearbeitungsschritte. Vor Ort kann der Bediener dann das langschaftige Werkzeug für den jeweiligen Manipulationsschritt mit dem Manipulator bestücken, den er gerade benötigt.

Das erfindungsgemäße langschaftige Werkzeug weist einen sich entlang einer Längsachse erstreckenden Schaft auf. Dieser Schaft hat insbesondere bevorzugt eine Länge von mehr als 1 m, insbesondere bevorzugt eine Länge von mehr als 1,5 m und ganz besonders bevorzugt eine Länge von mehr als 2 m. Die zu wählende Länge des Schafts wird regelmäßig von dem Einsatzgebiet des langschaftigen Werkzeugs abhängen. In einer bevorzugten Ausführungsform wird das erfindungsgemäße Werkzeug zum Bearbeiten einer in einer Grube befindlichen Rohrleitung von der Erdoberfläche aus verwendet. Bei den Rohrleitungen kann es sich insbesondere bevorzugt um Versorgungsleitungen für Wasser, Strom, Gas, Fernwärme, Kommunikationsleitungen, wie Telefonleitungen, und Entsorgungsleitungen, wie beispielsweise Abwasserleitungen handeln. Diese Versorgungs- und Entsorgungsleitungen werden häufig in einer Tiefe zwischen 0,5 m und 3 m verlegt. Möchte man es dem Bediener ermöglichen, auf der Erdoberfläche stehend die Manipulation eines Rohres mit dem erfindungsgemäßen langschaftigen Werkzeug vorzunehmen, so wird man den Schaft um mehr als 1 m, vorzugsweise um mehr als 1,5 m länger gestalten, als der Abstand der in der Grube befindlichen Rohrleitung gemessen von der Erdoberfläche. Insbesondere bevorzugt hat der Schaft eine Länge von weniger als 15 m, insbesondere bevorzugt von weniger als 10 m, insbesondere bevorzugt von weniger als 5 m und ganz besonders bevorzugt von weniger als 3 m

Das erfindungsgemäße Werkzeug ist insbesondere bevorzugt ein tragbares Werkzeug, weist also eine Größe und ein Gewicht auf, die es einem einzigen Bediener erlauben, das Werkzeug zu bewegen und mit ihm Manipulationshandlungen, beispielsweise von der Oberfläche aus an einer in einer Grube befindlichen Rohrleitung durchführen zu können. Insbesondere wiegt der Schaft des Werkzeugs (also das Werkzeug ohne einen Manipulator) weniger als 50 kg, insbesondere bevorzugt weniger als 25 kg, insbesondere bevorzugt weniger als 10 kg und ganz besonders bevorzugt weniger als 5 kg und insbesondere bevorzugt von weniger als 2,5kg. Ein solches Gewicht kann auch bei Längen des Schafts von 2 m oder mehr erreicht werden, beispielsweise wenn der Grundkörper des Schafts aus Kunststoff, beispielsweise einem Kohlefaserverbundwerkstoff hergestellt wird.

In einer bevorzugten Ausführungsform weist der Schaft einen Grundkörper auf, der ein Hohlkörper, insbesondere bevorzugt ein Rohr, insbesondere bevorzugt ein Rohr mit ringförmigem Querschnitt, insbesondere bevorzugt ein Rohr mit kreisringförmigem Querschnitt ist. Es sind aber auch Ausführungsformen denkbar, bei denen ein als Rohr ausgebildeter Grundkörper des Schafts einen rechteckigen, elliptischen, dreieckigen oder polygonen Querschnitt aufweist. Der Grundkörper kann aus einem Metall bestehen. Um den Schaft transportierbar zu halten, ist es bevorzugt, wenn der Schaft leicht ausgeführt wird. Dabei sind aber auch die Belastungen des Schafts, insbesondere die Notwendigkeit der Kraftübertragung durch den Schaft, zu berücksichtigen. So sind Anwendungsfälle denkbar, bei denen der Grundkörper aus Aluminium gefertigt wird. In einer bevorzugten Ausführungsform ist der Grundkörper nicht aus einem Metall hergestellt. In einer bevorzugten Ausführungsform ist der Grundkörper aus einem Kunststoff hergestellt. In einer besonders bevorzugten Ausführungsform ist der Grundkörper aus einem Kohlefaserverbundwerkstoff hergestellt.

An einem ersten Ende des Schafts ist ein Griff vorgesehen. Ein solcher Griff kann bereits durch die im Bereich des Endes des Grundkörpers vorgesehene Außenoberfläche des Schafts gebildet werden. In einer bevorzugten Ausführungsform sind jedoch zur Bildung des Griffs weitere Elemente an dem ersten Ende des Schafts vorgesehen, wie beispielsweise Vorsprünge, Griffösen, gewellte Abschnitte, Oberflächenabschnitte mit Gummibeschichtung oder T-Stücke oder eine Kurbel.

Das langschaftige Werkzeug hat ein zweites, dem ersten Ende gegenüberliegendes Ende. An diesem zweiten Ende ist eine Aufnahme für einen Manipulator vorgesehen. In einer bevorzugten Ausführungsform weist die Aufnahme einen zylindrischen Abschnitt auf, mit dem sie in einen korrespondierend ausgeführten hohlzylindrischen Abschnitt des Manipulators eingeführt werden kann, um dadurch den Manipulator aufzunehmen. In einer alternativen Ausführungsform ist es denkbar, die Aufnahme mit einem hohlzylindrischen Abschnitt auszugestalten, in den ein entsprechend ausgebildeter zylindrischer Abschnitt des Manipulators eingeführt werden kann, um dadurch den Manipulator von der Aufnahme aufnehmen zu lassen. Anstelle von zylindrischen Querschnitten sind auch elliptische Querschnitte oder polygone, beispielsweise dreieckige, rechteckige oder mehreckige Querschnitte denkbar. Elliptische und polygone Querschnitte können das Übertragen von Drehmomenten von der Aufnahme auf den Manipulator erleichtern.

Die Aufnahme weist mindestens einen Raststift auf. Der Raststift ist zum Eingriff mit einer Ausnehmung an dem Manipulator vorgesehen und vorstehend ausgebildet. Aus dieser vorstehenden Position kann der Raststift in eine zurückgezogene Position bewegt werden. Durch den Eingriff des Raststifts in die Ausnehmung des Manipulators wird ein sicheres Halten des Manipulators in der Aufnahme ermöglicht. Dieses sichere Halten, dass insbesondere auch durch einen Formschluss zwischen dem Raststift und der Ausnehmung herbeigeführt werden kann, ist insbesondere dann notwendig, wenn über den Schaft Stoßkräfte oder Drehmomente auf den Manipulator übertragen werden müssen, beispielsweise, wenn mit einem als Schaber ausgebildeten Manipulator Erde von einer Rohrleitung abgeschabt werden soll oder, wenn ein starre Bürsten aufweisender Manipulator eingesetzt wird, um Erde von der Erdoberfläche abzuschaben oder, wenn ein eine schraubenzieherartige Spitze aufweisender Manipulator dazu verwendet wird, in den drehbaren Einstellschlitz eines Ventils eingeführt zu werden, um eine Einstellung des Ventils vorzunehmen.

In einer bevorzugten Ausführungsform ist der Raststift ein zylindrisches Element. Es sind Ausführungen denkbar, bei denen der Raststift bezogen auf seine Längsachse keinen runden, sondern einen elliptischen oder polygonen, beispielsweise dreieckigen, rechteckigen oder mehreckigen Querschnitt aufweist. Solche Querschnitte können jedoch zum Verkanten führen, so dass ein kreisförmiger Querschnitt des Raststifts bevorzugt wird. Der Raststift kann endseits ballig ausgeführt sein, da dadurch ein Eingreifen in eine Ausnehmung eines Manipulators vereinfacht wird. In einer anderen Ausführungsform kann der Raststift an einem Ende kegelförmig oder kegelstumpfförmig ausgeführt werden. Auch solche Ausführungsformen erleichtern das Eingreifen des Raststifts in eine Ausnehmung des Manipulators.

Der Raststift wird häufig als Verliersicherung verwendet werden bzw. eingesetzt werden, wenn nur geringe Drehmomente zwischen dem Schaft und dem Manipulator über den Raststift übertragen werden sollen. In solchen Ausführungsformen ist es vorteilhaft, wenn der Raststift schmal ausgeführt wird, wenn also seine Längserstreckung (Erstreckung in die Radialrichtung relativ zur Längsachse des Schafts) deutlich größer ist als seine Erstreckung in eine Richtung senkrecht hierzu, beispielsweise um das 1,5-fache, insbesondere bevorzugt um mehr als das 1,5-fache, insbesondere bevorzugt um mehr als das 2-fache größer ist. Es sind aber auch Ausführungsformen denkbar, bei denen höhere Drehmomente über den Raststift von der Aufnahme auf den Manipulator übertragen werden sollen. Es kann sich somit anbieten, den Raststift als Klotz auszuführen, dessen Erstreckung senkrecht zu einer Längsachse (senkrecht zu seiner radialen Erstreckung relativ zur Längsachse des Schafts) größer ist als seine Längserstreckung, insbesondere bevorzugt um das 1,5-fache, insbesondere bevorzugt um mehr als das 1,5-fache und ganz besonders bevorzugt um mehr als das 2-fache größer ist.

In einer bevorzugten Ausführungsform weist das langschaftige Werkzeug mindestens zwei derartige Raststifte, insbesondere bevorzugt drei, ganz besonders bevorzugt vier derartige Raststifte auf. Die Raststifte sind insbesondere bevorzugt gleichmäßig über den Umfang der Ausnehmung verteilt. Dadurch wird das Eingreifen der Raststifte in die jeweiligen Ausnehmungen des Manipulators vereinfacht, da es mehrere Relativpositionen der gleichmäßig über den Umfang der Aufnahme verteilten Raststifte relativ zu den entsprechend gleichmäßig über den Umfang des entsprechenden Abschnitts des Manipulators verteilten Ausnehmungen gibt. Alternativ ist eine Ausführungsform denkbar, bei der es auf eine besondere Ausrichtung des Manipulators relativ zur Aufnahme bzw. relativ zum Schaft ankommt. Diese kann bei dem Vorsehen mehrerer Stifte besonders einfach dadurch herbeigeführt werden, dass die Stifte unregelmäßig über den Umfang der Aufnahme verteilt sind. So kann beispielsweise eine Ausführungsform geschaffen werden, bei der nur eine Relativposition der Raststifte relativ zu den Ausnehmungen möglich ist und dadurch sichergestellt wird, dass die Raststifte nur dann in die Ausnehmungen des Manipulators eingreifen, wenn die gewünschte Relativlage herbeigeführt worden ist.

In einer bevorzugten Ausführungsform sind die Raststifte auf einem Kreis um die Längsachse des Schafts angeordnet. In einer bevorzugten Ausführungsform sind die Massenschwerpunkte und/oder die Volumenschwerpunkte der Raststifte in einer Ebene angeordnet, insbesondere bevorzugt in einer Ebene angeordnet, die senkrecht zur Längsachse des Schafts steht und ganz besonders bevorzugt in einem Kreis in einer solchen Ebene angeordnet, dessen Mittelpunkt auf der Längsachse liegt.

Der Raststift ist so ausgeführt, dass er aus einer vorstehenden Position in eine zurückgezogene Position bewegt werden kann. In einer bevorzugten Ausführungsform enthält die Bewegung aus der vorstehenden Position in die zurückgezogene Position zumindest eine radiale Komponente, also eine Bewegungskomponente senkrecht zur Längsachse des Schafts. Insbesondere bevorzugt ist die Bewegungsrichtung von der vorstehenden Position in die zurückgezogene Position radial, also senkrecht zur Längsachse des Schafts. In der vorstehenden Position kann der Raststift der Längsachse des Schafts näher sein. Eine solche Anordnung bietet sich insbesondere an, wenn die Aufnahme einen Hohlzylinder aufweist, in den ein Vorsprung des Manipulators gesteckt wird. In einer solchen Ausführungsform steht der Raststift insbesondere bevorzugt nach innen vor und wird bei der Bewegung in seine zurückgezogene Position von der Längsachse des Schafts fortbewegt. In einer alternativen Ausführungsform ist die vorstehende Position des Raststifts weiter entfernt von der Längsachse des Schafts als die zurückgezogene Position. Eine solche Ausführungsform bietet sich insbesondere an, wenn der Manipulator einen hohlzylinderförmigen Abschnitt aufweist, der auf eine als Vorsprung ausgeführte Aufnahme aufgeschoben wird. In einer solchen Ausführungsform ragt der Raststift in seiner vorstehenden Position insbesondere bevorzugt radial nach außen vor und wird bei seiner Bewegung in die zurückgezogene Position auf die Längsachse zu bewegt.

In einer bevorzugten Ausführungsform ist eine Raststiftaufnahme vorgesehen, die einen Teil des Raststifts aufnimmt. Eine solche Aufnahme kann beispielsweise klotzförmig ausgebildet sein oder Teil eines Spreizkonus sein. Insbesondere bevorzugt ist der Raststift fest in der Raststiftaufnahme gehalten, insbesondere bevorzugt fest hinsichtlich translatorischer Relativbewegungen und/oder fest hinsichtlich rotatorischer Relativbewegungen relativ zur Raststiftaufnahme. Das Vorsehen einer Raststiftaufnahme vereinfacht das Übertragen von Bewegungen auf den Raststift, insbesondere bevorzugt das Zurückziehen des Raststifts, wenn hierfür federnde Elemente vorgesehen werden sollen.

Neben dem Raststift weist die Aufnahme des erfindungsgemäßen langschaftigen Werkzeugs eine Kupplungshälfte zum Kuppeln mit einer Kupplungshälfte eines Manipulators auf, die drehbar relativ zum Grundkörper ist. Das erfindungsgemäße Werkzeug erlaubt es, durch die Raststifte der Aufnahme Ausführungsformen vorzusehen, bei denen eine Drehbewegung des Grundkörpers in eine Drehbewegung des Manipulators übertragen wird. Die Erfindung möchte jedoch das Einsatzgebiet des Werkzeugs erhöhen und das Werkzeug dafür ausrüsten, Manipulationen vorzunehmen, bei denen der Grundkörper nicht rotatorisch bewegt wird und nur der Manipulator bzw. zumindest eine Manipulationsfläche des Manipulators rotatorisch bewegt werden soll. Hierfür sieht die Erfindung die Kupplungshälfte der Aufnahme vor, die relativ zum Grundkörper drehbar ist. Als Kupplungshälfte kann eine Reibscheibe vorgesehen sein, die mit einer entsprechend ausgeführten Reibscheibe eines Manipulators zusammenwirkt, so dass eine Rotation der Reibscheibe der Aufnahme in eine Rotation der Reibscheibe des Manipulators übertragen wird. Somit kann die Kupplung eine reibschlüssige Kupplung sein. Insbesondere bevorzugt wird jedoch eine formschlüssige Kupplung. Hierfür kann die eine Kupplungshälfte beispielsweise ein mehreckiger Klotz, beispielsweise ein viereckiger Klotz, ein fünfeckiger Klotz oder ein sechseckiger Klotz sein und die andere Kupplungshälfte als mehreckige, insbesondere viereckige, insbesondere bevorzugt fünfeckige, insbesondere bevorzugt sechseckige entsprechend ausgeführte Ausnehmung ausgeführt sein. Die Kupplung kann auch als Klauenkupplung ausgebildet sein oder als Stirnverzahnung oder beispielsweise auch als Magnetkupplung.

In einer bevorzugten Ausführungsform ist die Kupplungshälfte der Aufnahme konzentrisch mit der Längsachse des Schafts ausgeführt. In einer bevorzugten Ausführungsform ist bei mehreren Raststiften, die auf einem Kreis um die Längsachse des Schafts angeordnet sind, die Kupplungshälfte der Aufnahme innerhalb des Kreises angeordnet.

Der Raststift wird zur Einnahme der zurückgezogenen Position radial in Bezug auf die Längsachse bewegt. Es ist ein Konuselement vorgesehen, dessen Konusfläche in Kontakt mit einem Ende des Raststifts oder in Kontakt mit einer Raststiftaufnahme gebracht werden kann, die ein Ende des Raststifts aufnimmt, wobei ein Gleiten des Endes des Raststifts bzw. der Aufnahme entlang der Konusfläche eine Änderung der radialen Position des Raststifts relativ zur Längsachse bewirkt. Insbesondere bevorzugt ist die Konusfläche in Richtung der Längsachse bzw. in eine Richtung parallel zur Längsachse relativ zum Raststift beweglich ausgeführt. Wird die Konusfläche nun in Richtung der Längsachse bzw. in Richtung parallel zur Längsachse des Schafts bewegt, so gleitet das Ende des Raststifts bzw. so gleitet die Aufnahme entlang der Konusfläche. Hierdurch kann bewirkt werden, dass allein durch Verlagern der Konusfläche in Richtung der Längsachse bzw. in Richtung parallel zur Längsachse des Schafts die radiale Position des Raststifts eingestellt werden kann. Als Alternative ist eine sägezahnprofilartige oder ratschenartige, in Umfangsrichtung verlaufende Geometrie denkbar. Das Drehen einer solchen Geometrie um die Längsachse des Schafts bewirkt, dass schräg verlaufende Flächen um die Längsachse des Schafts gedreht werden. Kommen diese Schrägflächen in Kontakt mit dem Ende des Raststifts bzw. mit der Aufnahme, so kann auch eine solche Bewegung ein Gleiten des Endes des Raststifts bzw. der Aufnahme entlang der Schrägfläche zu einer Änderung der radialen Position des Raststifts relativ zur Längsachse bewirken.

In einer bevorzugten Ausführungsform ist eine Konuselement-Feder vorgesehen, die gespannt wird, wenn das Konuselement aus einer Vorzugslage in eine andere Lage bewegt wird. In einer bevorzugten Ausführungsform kann das Konuselement in Richtung der Längsachse bzw. in Richtung parallel zur Längsachse bewegt werden. In einer bevorzugten Ausführungsform ist die Vorzugslage des Konuselements so gewählt, dass in der Vorzugslage des Konuselements der Raststift der Aufnahme in der vorstehenden Position ist. Aufgrund der Konuselement-Feder nimmt das Konuselement diese Vorzugslage ein, wenn keine Kräfte appliziert werden, die das Konuselement aus der Vorzugslage bewegen. Das bedeutet, dass im kraftlosen Zustand das Konuselement die Vorzugslage einnimmt. Das bietet Vorteile hinsichtlich der Sicherung des Manipulators in der Aufnahme. So wird der Manipulator durch die vorstehenden Raststifte sicher in der Aufnahme gehalten, bis aktiv eine Kraft appliziert wird, die das Konuselement aus der Vorzugslage in eine andere Lage bewegt. In einer besonders bevorzugten Ausführungsform spannt die Konuselement-Feder das Konuselement in seiner Vorzugslage gegen einen Vorsprung vor. Die Konuselement-Feder kann als Schraubenfeder ausgeführt sein. In einer bevorzugten Ausführungsform ist die Konuselement-Feder, insbesondere bevorzugt wenn sie als Schraubenfeder ausgeführt ist, im Innern des Grundkörpers angeordnet. Beispielsweise ist es denkbar, dass die Schraubenfeder mit einem Ende gegen einen Vorsprung, insbesondere bevorzugt einem ringförmigen Vorsprung, anliegt, der von der Innenoberfläche eines rohrförmig ausgebildeten Grundkörpers des Schafts nach innen ragt. In einer solchen Ausführungsform kann das gegenüberliegende Ende der Schraubenfeder an dem Konuselement anliegen oder an einem Vorsprung anliegen, der an einer Außenoberfläche eines Elements, beispielsweise eines Innenrohrs, ausgeführt ist, welches mit dem Konuselement verbunden ist, beispielsweise, wenn das Konuselement an der Spitze eines Innenrohrs ausgeführt ist.

Das Konuselement ist an einem Rohr vorgesehen, das in einem Grundkörper des Schafts angeordnet ist oder an einem Stab vorgesehen, der in dem Grundkörper des Schafts angeordnet ist. Dadurch kann ein das Konuselement bewegendes Element, beispielsweise das Rohr oder der Stab durch den Grundkörper des Schafts geschützt werden.

In einer bevorzugten Ausführungsform schließt sich an das Konuselement ein zylindrisches Element an, insbesondere am breiteren Ende des Konuselement. Dadurch wird eine Ausführungsform geschaffen, bei der ein Gleiten des Endes des Raststifts bzw. der Aufnahme entlang der Konusfläche eine Änderung der radialen Position des Raststifts relativ zur Längsachse bewirkt und der Raststift dann in dieser geänderten radialen Position auf die Außenoberfläche des zylindrischen Elements gelangt. Diese erlaubt eine weitere translatorische Bewegung des Konuselements, bzw. eines das Konuselement tragenden Rohrs oder Stabs relativ zum Endes des Raststifts bzw. der Aufnahme, ohne dass die radiale Position des Raststifts geändert wird. Eine solche Ausführungsform eignet sich besonders dann, wenn das Konuselement und die Kupplungshälfte der Aufnahme zu einer zusammenhängenden Baugruppe gehören. Wird die Kupplungshälfte der Aufnahme zum Zusammenwirken mit der Kupplungshälfte des Manipulators translatorisch bewegt, wird auch das Konuselement translatorisch bewegt. Nachdem die Kupplungshälften in Eingriff gekommen sind, kann der Wunsch bestehen, die Kupplungshälfte weiter translatorisch zu bewegen, ohne die radiale Position des Raststifts zu verändern. Beispielsweise erfolgt dies in Ausführungsformen, bei denen durch Rotation der Kupplungshälfte des Manipulators eine Schraube in eine Halterung des Manipulators geschraubt werden soll. Beim Einschrauben ändert sich die axiale Lage der Schraube, so dass die Kupplungshälften translatorisch verschiebbar ausgeführt sein sollten, zugleich aber die radiale Position des Raststifts nicht geändert werden soll. Diesem Umstand kann das vorsehen eines zylindrischen Elements am Ende des Konuselements Rechnung tragen.

In einer bevorzugten Ausführungsform weist das Werkzeug eine Grifffläche am ersten Ende auf, durch dessen Bewegung das Rohr bzw. der Stab, an dem das Konuselement vorgesehen ist, innerhalb des Grundkörpers des Schafts translatorisch und/oder rotatorisch bewegt werden kann. Diese Grifffläche kann ein Oberflächenabschnitt des Rohrs bzw. des Stabs sein, beispielsweise, wenn ein Abschnitt des Rohrs bzw. ein Abschnitt des Stabs am ersten Ende aus dem Grundkörper des Schafts hinausragt. In einer bevorzugten Ausführungsform ist die Grifffläche jedoch Teil eines an dem Rohr bzw. an dem Stab am ersten Ende ausgeformten Griffs. Beispielsweise kann das Rohr bzw. der Stab am ersten Ende einen T-förmig ausgebildeten Griff aufweisen. Ebenso ist ein kopf- oder pilzartig ausgeformter Griff am Ende des Rohrs bzw. des Stabs im Bereich des ersten Endes des Schafts denkbar. Ebenso kann eine Kurbel am Ende des Rohrs, bzw. des Stabs ausgebildet sein.

In einer bevorzugten Ausführungsform wird das in dem Grundkörper des Schafts angeordnete Rohr bzw. der in dem Grundkörper des Schafts angeordnete Stab durch Führungen in dem Grundkörper geführt. Beispielsweise kann an dem dem ersten Ende des Schafts am nächsten liegenden Ende des Grundkörpers ein Verschlusselement vorgesehen sein (beispielsweise als Endkappe), das den Grundkörper an diesem Ende verschließt, das jedoch zugleich als Führung für das Rohr bzw. für den Stab fungiert. Ferner ist es denkbar, dass noch weitere scheibenartige Führungselemente innerhalb des Grundkörpers vorgesehen sind, die von dem Rohr bzw. dem Stab durchgriffen werden und dieses bzw. diesen somit innerhalb des Grundkörpers des Schafts führen.

In einer bevorzugten Ausführungsform ist eine Grifffläche am zweiten Ende des Schafts vorgesehen, durch deren Bewegung das Rohr bzw. der Stab innerhalb des Schafts translatorisch oder rotatorisch bewegt werden kann. Ein solcher Griff kann bereits durch die im Bereich des zweiten Endes des Grundkörpers vorgesehene Außenoberfläche des Schafts gebildet werden. In einer bevorzugten Ausführungsform sind jedoch zur Bildung des Griffs weitere Elemente an dem zweiten Ende des Schafts vorgesehen, wie beispielsweise Vorsprünge, Griffösen, gewellte Abschnitte, Oberflächenabschnitte mit Gummibeschichtung.

Insbesondere bevorzugt ist die Grifffläche am zweiten Ende des Schafts jedoch auf einem Schieber angeordnet, der außen auf dem Grundkörper des Schafts angeordnet ist. Dieser Schieber kann translatorisch und/oder rotatorisch relativ zum Grundkörper des Schafts bewegt werden. Der Schieber kann einen Mitnehmer aufweisen, der durch die Außenwandung des Grundkörpers des Schafts hindurchgreift, beispielsweise in ein Langloch eingreift, das am Außenumfang des Grundkörpers des Schafts vorgesehen ist. Das Langloch kann sich parallel zur Längsachse erstrecken, kann jedoch auch im Winkel dazu verlaufen. Der Mitnehmer kann mit dem Rohr bzw. dem Stab unmittelbar verbunden sein, so dass eine Bewegung des Schiebers über den Mitnehmer unmittelbar in eine Bewegung des Rohrs bzw. des Stabs übertragen wird. Ebenso ist es denkbar, dass der Mitnehmer einen Vorsprung auf dem Rohr bzw. auf dem Stab kontaktiert und über diesen Kontakt eine Bewegung des Schiebers auf das Rohr bzw. dem Stab überträgt. In einer bevorzugten Ausführungsform greift der Mitnehmer auf einer Seite an einem Vorsprung auf dem Rohr bzw. dem Stab an, während in Längsrichtung des Schafts gesehen auf der anderen Seite des Vorsprungs eine Schraubenfeder in Kontakt mit dem Vorsprung steht, die das Rohr bzw. den Stab in eine Vorzugslage vorspannt. Somit kann mit dem Mitnehmer der Vorsprung und damit das Rohr bzw. der Stab aus der Vorzugslage heraus in eine andere Lage bewegt werden, wodurch die Schraubenfeder gespannt wird, während ein Freigeben des Mitnehmers bewirkt, dass die Schraubenfeder den Vorsprung und damit das Rohr bzw. den Stab, aber auch den Mitnehmer und damit den Schieber zurück in eine Vorzugslage bewegt.

In einer bevorzugten Ausführungsform ist der Schieber ein hohlzylinderförmiges Element, insbesondere bevorzugt ein buchsenförmiges Element, das auf einem rohrförmig ausgebildeten Grundkörper des Schafts aufgeschoben ist.

In einer bevorzugten Ausführungsform ist eine Raststift-Feder vorgesehen, die gespannt wird, wenn der Raststift aus einer Vorzugslage in eine andere Lage bewegt wird. In einer bevorzugten Ausführungsform sind mehrere Raststifte vorgesehen, die jeweils eine Raststiftaufnahme aufweisen. Die Raststiftaufnahmen sind radial um die Längsachse des Schafts angeordnet, beispielsweise als Teil eines Spreizkonus. Als Raststift-Feder kann ein O-Ring oder eine Feder oder mehrere Federn vorgesehen sein, der bzw. die in Nuten an den Raststiftaufnahmen eingelegt ist. Werden die Raststiftaufnahmen nach außen bewegt, so wird der O-Ring / Feder gedehnt, die Raststift-Feder demnach gespannt. Im kraftlosen Zustand zieht der O-Ring / Feder die Raststiftaufnahmen radial nach innen zurück. Als Raststift-Feder können auch andere federnde Element, wie beispielsweise ein Federring vorgesehen sein. Es sind ferner Ausführungsformen denkbar, bei denen anstelle der Raststift-Feder Magnetkraft eingesetzt wird, beispielsweise wenn die einzelnen Elemente eines Spreizkonus so ausgeführt sind, dass sie einander anziehen.

In einer bevorzugten Ausführungsform ist die Kupplungshälfte der Aufnahme translatorisch relativ zum Schaft bewegbar. In dieser bevorzugten Ausführungsform schafft das langschaftige Werkzeug die Möglichkeit, mit einem Manipulator zu arbeiten, der eine Manipulationsfläche aufweist, die über das Eingreifen der Kupplungshälften der Aufnahme und des Manipulators in eine Rotationsbewegung versetzt werden kann. Andererseits schafft das so ausgeführte langschaftige Werkzeug die Möglichkeit, die Kupplungshälfte zurückzuziehen und dann nur mit einem fest in der Aufnahme gehaltenen Manipulator ohne bewegliche Manipulationsfläche zu arbeiten.

Die Kupplungshälfte der Aufnahme ist an dem Konuselement ausgebildet.

In einer bevorzugten Ausführungsform ist ein Rastbolzen vorgesehen, der eine Öffnung im Grundkörper des Schafts durchgreift und in eine Rastnut auf dem Rohr bzw. dem Stab eingreift. Die Rastnut kann in Umfangsrichtung verlaufen. Damit kann durch das Eingreifen des Rastbolzens in die Rastnut die translatorische Lage des Rohrs bzw. des Stabs relativ zum Grundkörper festgelegt werden, zugleich aber eine Rotation des Rohrs bzw. Stabs relativ zum Grundkörper möglich bleiben. In einer alternativen Ausführungsform kann die Rastnut in Richtung parallel zur Längsachse verlaufen. Damit kann durch das Eingreifen des Rastbolzens in die Rastnut die rotatorische Lage des Rohrs, bzw. des Stabs relativ zum Grundkörper festgelegt werden, zugleich aber eine Translationsbewegung des Rohrs bzw. Stabs relativ zum Grundkörper möglich bleiben. Ebenso ist es denkbar, dass die Rastnut eine Art Ausnehmung ist, die sowohl eine translatorische als auch rotatorische Festlegung bewirkt. Das Rohr bzw. der Stabs kann mehrere Rastnuten aufweisen. Die Rastnuten können der gleichen Art sein, also beispielsweise alle als umlaufende Nuten ausgeführt sein. Es ist aber auch denkbar, dass die Rastnuten unterschiedlich ausgeführt sind.

Der Manipulator des erfindungsgemäßen langschaftigen Werkzeugs kann verschiedentlich ausgeführt werden. Es sind starre Manipulatoren denkbar, wobei unter einem starren Manipulator ein Element verstanden wird, bei dem alle Oberflächen des Elements stets die gleiche Lage zueinander aufweisen. Derartige starre Manipulatoren können Stifte, Spitzen, Schaber, Elemente mit schraubenzieherartigen Enden, Haken, Rechen, Hammer, kopfartige Elemente, beilartige Elemente, sägeartige Elemente, messerartige Elemente mit stehender Klinge, ein Spiegel, eine Kamera, ein Sensor, eine Lampe, eine Bürste, ein Schlüssel, beispielsweise ein Maulschlüssel sein.

Ferner kann der Manipulator ein passiv bewegter Manipulator sein. Bei einem solchen Manipulator ist eine Manipulationsfläche vorgesehen, die relativ zu einem anderen Element des Manipulators, vorzugsweise eine als Teil des Manipulators vorgesehene Halterung, bewegt werden kann. Ein derartiger Manipulator kann beispielsweise ein scheibenförmiges Messer aufweisen, das sich relativ zu einer Halterung dreht, beispielsweise auf einer Achse angeordnet ist, die in der Halterung gelagert ist. Andere Manipulatoren dieser Art können beispielsweise drehend gelagerte Bürsten sein.

Der Manipulator kann ferner eine aktiv bewegte Manipulationsfläche aufweisen. Darunter wird verstanden, dass die Manipulationsfläche des Manipulators durch eine Bewegung der Kupplungshälfte der Aufnahme, die in eine Bewegung der Kupplungshälfte des Manipulators übertragen wird, von einer ersten Position in eine zweite Position relativ zu einer an dem Manipulator ausgebildeten Halterung bewegt wird. Die Bewegung kann eine kontinuierliche Bewegung, beispielsweise eine Rotation um die Längsachse des Schafts bzw. um eine Achse parallel zur Längsachse des Schafts sein. Beispielsweise kann die Manipulationsfläche Teil der Oberfläche eines Bohrers sein. Die aktiv herbeigeführte Bewegung kann jedoch auch das Bewegen von einer ersten Position in eine zweite Position der Manipulationsfläche sein, die dann während der Manipulation beibehalten wird. Beispielsweise kann die Manipulationsfläche die Oberfläche eines ersten Greifers sein, der durch aktives Bewegen auf eine Gegenfläche zugestellt werden kann, so dass ein zu haltendes Element zwischen der Greiffläche und der Gegenfläche gehalten werden kann. Ebenso ist das Vorsehen von zwei Manipulationsflächen denkbar, die jeweils an beweglichen Armen vorgesehen sind, die aktiv aufeinander zugestellt werden können. Es ist jedoch auch denkbar, dass die Manipulationsfläche die Spitze eines Schabers oder Spatels ist, der in einer ersten Position in einem ersten Winkel zu einer Halterung angeordnet ist und durch aktives Bewegen in eine zweite Position gekippt wird. Dies lässt sich beispielsweise für Bearbeitungssituationen verwenden, bei denen in einer ersten Position die Oberseite eines Rohrs abgeschabt werden soll und in einer zweiten Position die Unterseite eines Rohrs abgeschabt werden soll, wozu der Schaber bzw. Spatel vorzugsweise gegenläufig zum Schaft, also nach Art eines Widerhakens positioniert wird. In einer bevorzugten Ausführungsform weist der Manipulator eine Kupplungshälfte auf, die in die Kupplungshälfte der Aufnahme eingreift bzw. in die die Kupplungshälfte der Aufnahme eingreift, wenn der Manipulator von der Aufnahme aufgenommen wird.

In einer bevorzugten Ausführungsform kann der Manipulator ein Getriebe aufweisen, das die Rotationsbewegung der Kupplungshälfte um eine Rotationsachse in eine Rotationsbewegung der Manipulationsfläche um eine andere Rotationsachse wandelt. Durch ein solches Getriebe kann ein Versatz der Rotationsachse parallel zur Rotationsachse, um die die Kupplungshälfte rotiert, bewirkt werden. Durch Einsatz von Kegelgetrieben kann sogar die Rotationsachse der Manipulationsfläche im Winkel zur Rotationsachse der Kupplungshälfte stehen. Hierzu können auch Winkelgetriebe eingesetzt werden. Es können sogar Verteilergetriebe vorgesehen sein, bei denen die Drehung der Kupplungshälfte des Manipulators in Drehungen verschiedener Elemente um verschiedene, meist parallel zueinander ausgeführte Achsen umgesetzt wird. Ebenso kann ein Getriebe die Drehbewegung in eine axiale Bewegung umsetzen. So kann beispielsweise eine Spindel vorgesehen sein, die in eine entsprechend ausgebildete Verzahnung in einem linear geführten Schlitten eingreift, so dass eine Drehung der Spindel ein Bewegen des Schlittens entlang seiner Führung bewirkt.

Das erfindungsgemäße System weist ein erfindungsgemäßes langschaftiges Werkzeug mit einem ersten Manipulator und einem zweiten Manipulator auf, wobei in einem ersten Systemzustand der erste Manipulator von der Aufnahme aufgenommen wird und in einem zweiten Systemzustand der zweite Manipulator anstelle des ersten Manipulators von der Aufnahme aufgenommen wird.

In einer bevorzugten Ausführungsform weist das System mindestens einen starren Manipulator und mindestens einen passiv bewegten Manipulator auf. In einer bevorzugten Ausführungsform weist das System mindestens einen starren Manipulator und mindestens einen aktiv bewegten Manipulator auf. In einer bevorzugten Ausführungsform weist das System mindestens einen aktiv bewegten Manipulator und mindestens einen passiv bewegten Manipulator auf. In einer bevorzugten Ausführungsform weist das System mindestens einen starren Manipulator und mindestens einen passiv bewegten Manipulator auf und mindestens einen aktiv bewegten Manipulator auf.

Das erfindungsgemäße Werkzeug und das erfindungsgemäße System finden vorzugsweise Einsatz zum Manipulieren eines Gegenstandes in einem Raum durch eine Öffnung hindurch, die einen Öffnung aufweist, deren Querschnitt so gering ist, dass eine Person die Öffnung nicht passieren kann, insbesondere bevorzugt einen Querschnitt aufweist, dessen größte Erstreckung kleiner als 1m, insbesondere bevorzugt kleiner als 0,8m und besonders bevorzugt kleiner als 0,5m ist. Insbesondere bevorzugt wird das erfindungsgemäße Werkzeug und das erfindungsgemäße System zum Manipulieren eines Gegenstandes in einem Raum durch eine Öffnung hindurch verwendet, die einen kreisförmige Öffnung aufweist, dessen Durchmesser so gering ist, dass eine Person die Öffnung nicht passieren kann, insbesondere bevorzugt einen Durchmesser aufweist, der kleiner als 1m, insbesondere bevorzugt kleiner als 0,8m und besonders bevorzugt kleiner als 0,7m ist. Das erfindungsgemäße Werkzeug und das erfindungsgemäße System finden vorzugsweise Einsatz zum Bearbeiten einer in einer Grube befindlichen Rohrleitung von der Erdoberfläche aus. Die Bearbeitung kann das Reinigen der Rohrleitung von außen beinhalten, also beispielsweise das Entfernen von an der Rohrleitung anhaftender Erde. Das Bearbeiten der Rohrleitung kann auch das Einstellen von Ventilen an der Rohrleitung sein, beispielsweise durch Drehen eines Ventilrads oder durch Drehen eines Schlitzes, in den ein schraubenzieherartiges Element eingeführt wird, um das Ventil einzustellen oder beispielsweise durch Drehen eines Vierkants. Das Bearbeiten der Rohrleitung kann ferner das Aufbringen von Farbe beinhalten. Das Bearbeiten der Rohrleitung kann auch das Zertrennen der Rohrleitung beinhalten. Das Bearbeiten der Rohrleitung kann ferner
- das Entfernen einer Oxidschicht,
- das Anfasen eines Rohrendes,
- das Markieren oder Anzeichnen an einem Rohr,
- das Manipulieren eines Rohrs im Sinne eines Drehens oder Schiebens des Rohrs,
- das Erzeugen einer Steckverbindung, beispielsweise einer Steckverbindung für das elektrische Schweißen zweier Rohrenden,
- das Erzeugen eines Potentialausgleichs, insbesondere in Form des Anbringens einer ersten Klemme an einem ersten Rohrabschnitt und das Anbringen einer zweiten, durch ein Kabel mit der ersten Klemmen verbundenen Klemme an einem zweiten Rohrabschnitt,
- das Anbringen von Fittings,
- das Ausbohren und/oder
- das Erzeugen einer Schweißverbindung sein.

Nachfolgend wird die Erfindung anhand von lediglich Ausführungsbeispielen der Erfindung darstellenden Zeichnungen näher erläutert. Darin zeigen:
- Fig. 1: eine Seitenansicht des Schafts des erfindungsgemäßen langschaftigen Werkzeugs;
- Fig. 2: eine geschnittene Ansicht des zweiten Endes des Schafts des Werkzeugs gemäß Fig. 1 mit einem von der Aufnahme beabstandeten Manipulator;
- Fig. 3: eine geschnittene Ansicht des zweiten Endes des Schafts des Werkzeugs gemäß Fig. 1 mit Teilen eines von der Aufnahme aufgenommenen Manipulators;
- Fig. 4: eine perspektivische Ansicht des zweiten Endes des Schafts mit den Raststiften in der zurückgezogenen Position;
- Fig. 5: eine perspektivische Ansicht des zweiten Endes des Schafts mit den Raststiften in der vorstehenden Position;
- Fig. 6: eine geschnittene Ansicht des ersten Endes des Schafts;
- Fig. 7: eine erste Bauform eines Manipulators in einer perspektivischen Ansicht;
- Fig. 8: eine erste Weiterbildung der in Fig. 7 dargestellten ersten Bauform in einer perspektivischen Ansicht in einer ersten Lage;
- Fig. 9: eine erste Weiterbildung der in Fig. 7 dargestellten ersten Bauform in einer perspektivischen Ansicht in einer zweiten Lage;
- Fig. 10: eine zweite Weiterbildung der in Fig. 7 dargestellten ersten Bauform in einer perspektivischen Ansicht in einer ersten Lage;
- Fig. 11: eine zweite Weiterbildung der in Fig. 7 dargestellten ersten Bauform in einer perspektivischen Ansicht in einer zweiten Lage;
- Fig. 12: eine perspektivische Ansicht einer zweiten Bauform eines Manipulators in einem ersten Zustand;
- Fig. 13: eine perspektivische Teilansicht der zweiten Bauform gemäß Fig. 12 mit abgenommener Trennscheibe
- Fig. 14: eine perspektivische Ansicht einer vierten Bauform eines Manipulators in einem ersten Zustand;
- Fig. 15: eine perspektivische Ansicht der vierten Bauform gemäß Fig. 14 in einem zweiten Zustand;
- Fig. 16: eine teilweise durchsichtig ausgeführte perspektivische Ansicht der vierten Bauform gemäß Fig. 14;
- Fig. 17: eine perspektivische Ansicht einer fünften Bauform eines Manipulators in einem ersten Zustand;
- Fig. 18: eine perspektivische Ansicht der fünften Bauform gemäß Fig. 17 in einem zweiten Zustand;
- Fig. 19: eine teilweise durchsichtig ausgeführte perspektivische Ansicht der fünften Bauform gemäß Fig. 17 und
- Fig. 20: eine perspektivische Ansicht einer dritten Bauform eines Manipulators in einem ersten Zustand.

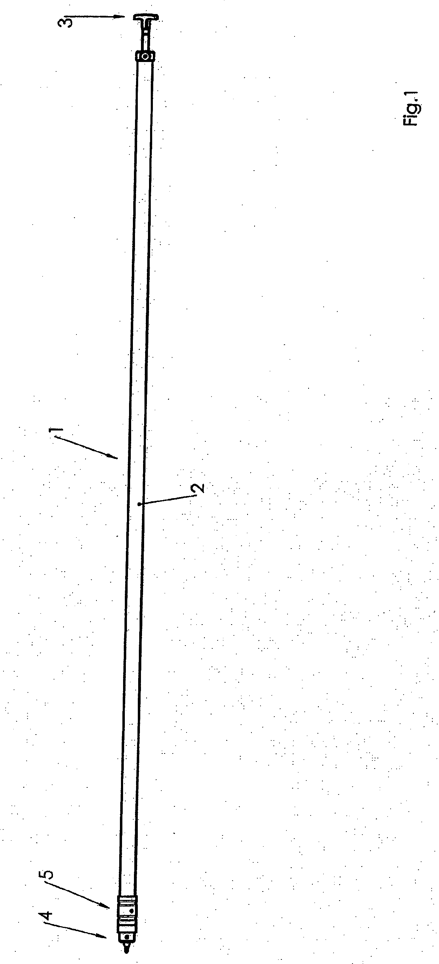

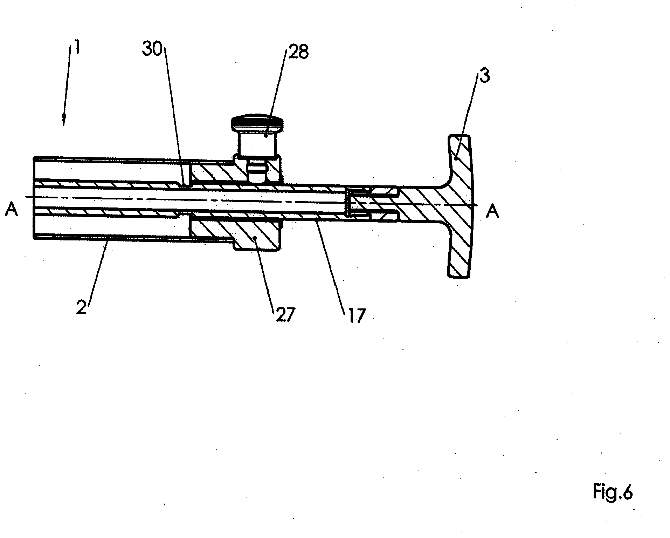

Die Fig. 1 zeigt eine Seitenansicht des Schafts 1 des erfindungsgemäßen langschaftigen Werkzeugs. Der Schaft 1 weist einen rohrförmigen Grundkörper 2 auf, der aus einem Kohlefaserverbundwerkstoff hergestellt ist. An einem ersten Ende des Schafts 1 ist ein Griff 3 in Form eines T-Stücks (vgl. Fig. 6) vorgesehen. An dem den ersten Ende gegenüberliegenden zweiten Ende des Schafts 1 ist eine Aufnahme 4 für einen Manipulator 6 vorgesehen. Benachbart der Aufnahme 4 ist ein weiterer Griff in Form einer hohlzylinderförmigen Buchse 5 vorgesehen.

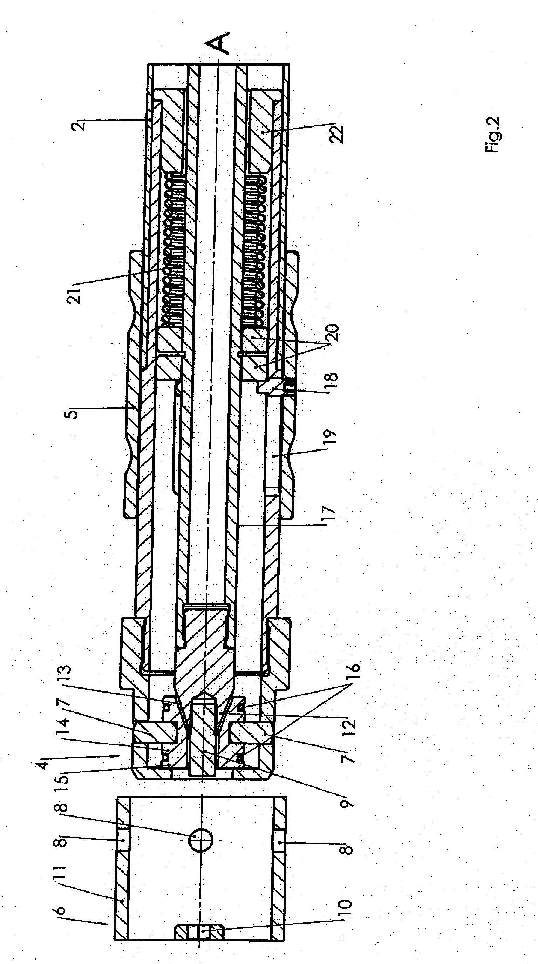

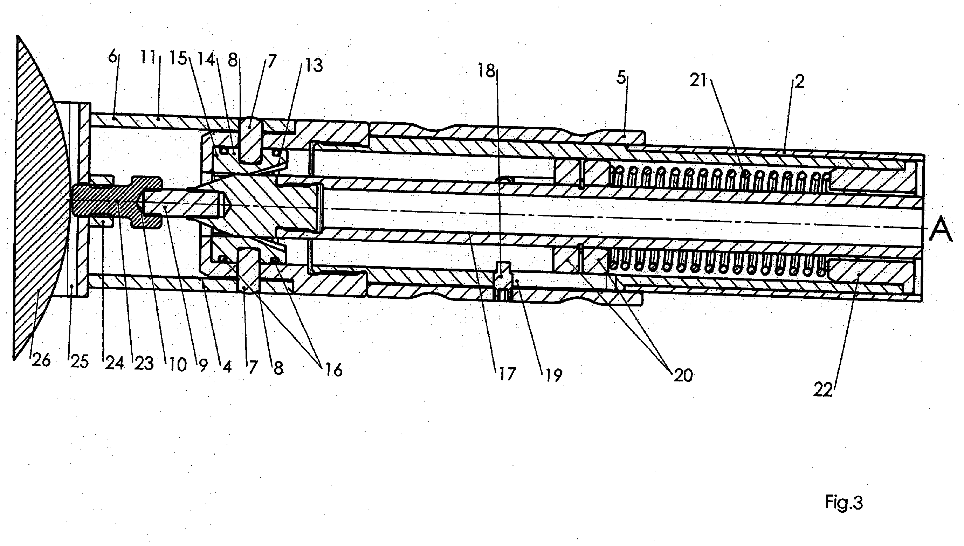

Fig. 2 zeigt eine geschnittene Ansicht des zweiten Endes des Schafts 1 des Werkzeugs mit einem teilweise dargestellten Manipulator 6, der in der Ansicht der Fig. 2 beabstandet von der Aufnahme 4 angeordnet ist und in der Darstellung der Fig. 3 in der Lage dargestellt ist, in der er von der Aufnahme 4 aufgenommen wurde.

Fig. 2 und 3 zeigen, dass die Aufnahme Raststifte 7 aufweist. In der in Fig. 3 dargestellten Lage mit von der Aufnahme 4 aufgenommenen Manipulator 6 stehen die Raststifte 7 vor und greifen in Ausnehmungen 8 des Manipulators ein. Wie sich aus dem Vergleich der Fig. 2 und 3 ergibt, können die Raststifte 7 aus der vorstehenden Position (vgl. Fig. 3) in eine zurückgezogene Position (vgl. Fig. 2) bewegt werden.

Ferner weist die Aufnahme 4 eine Kupplungshälfte 9 in Form eines Sechskants auf, der zum Kuppeln mit einer Kupplungshälfte 10 des Manipulators 6 vorgesehen ist. Die Kupplungshälfte 10 des Manipulators 6 weist eine sechskantförmige Ausnehmung auf. Die Kupplungshälfte 9 der Aufnahme 4 ist drehbar relativ zum Grundkörper 2 des Schafts 1 ausgeführt.

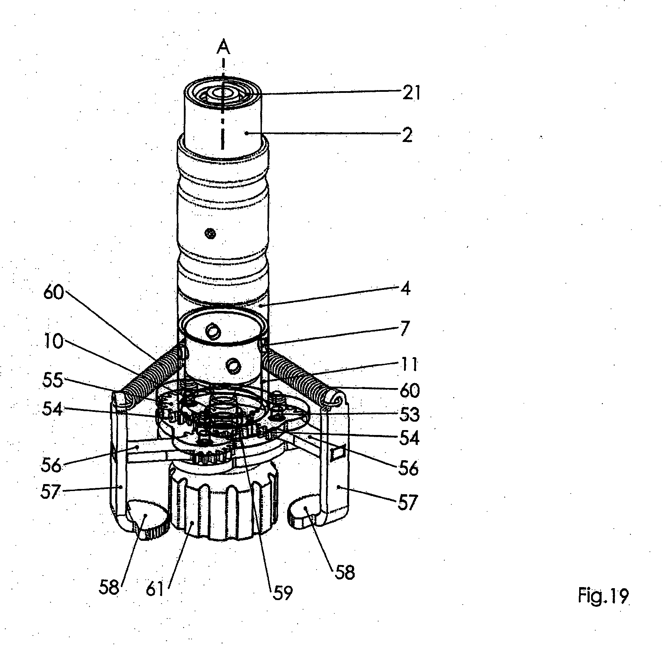

In der in den Fig. 1 bis 19 dargestellten Ausführungsformen ist die Aufnahme 4 als zylinderförmiger Abschnitt des Schafts 1 ausgeführt und dazu ausgestaltet, mit einem hohlzylinderförmigen Abschnitt 11 (nachfolgend auch Halterung 11 genannt) des Manipulators 6 zusammenzuwirken, in dem auch die Ausnehmungen 8 vorgesehen sind. In den hier dargestellten Ausführungsformen wird der Manipulator 6 somit auf die Aufnahme 4 aufgeschoben, wobei die hohlzylinderförmige Halterung 11 die Aufnahme 4 umgibt. Es ist ersichtlich, dass auch andere Ausführungsformen denkbar sind, nämlich solche, bei denen der hohlzylinderförmige Abschnitt 11 auf Seiten der Aufnahme 4 vorgesehen ist und der Manipulator 6 einen entsprechenden Vorsprung aufweist, der in den hohlzylinderförmigen Abschnitt 11 eingesteckt wird.

Wie der Vergleich der Fig. 2 und 3 zeigt, werden die Raststifte 7 zur Einnahme der zurückgezogenen Position radial in Bezug auf die Längsachse A des Schafts 1 bewegt.

Es ist ein Konuselement 12 vorgesehen, dessen Konusfläche 13 in Kontakt mit einer Raststiftaufnahme 14, die als Teil eines Spreizkonus 15 ausgeführt ist, gebracht werden kann, wobei die Raststiftaufnahme 14 ein Ende des jeweiligen Raststifts 7 aufnimmt. Ein Gleiten der Raststiftaufnahme 14 entlang der Konusfläche 13 des Konuselements 12 bewirkt eine Änderung der radialen Position der Raststifte 7 relativ zur Längsachse A. In Form von zwei O-Ringen 16 ist eine Raststift-Feder vorgesehen, die gespannt wird, wenn das Konuselement aus einer Vorzugslage, wie sie in Fig. 2 gezeigt ist, in eine andere Lage, wie sie in Fig. 3 gezeigt wird, bewegt wird. Die translatorische Verlagerung des Konuselements 12 entlang der Längsachse A bewirkt, dass der Spreizkonus 15 auseinandergespreizt wird und die Raststiftaufnahmen 14 radial nach außen bewegt werden. Die in Nuten der Raststiftaufnahmen 14 einliegenden O-Ringe 16 werden dabei gespannt.

Das Konuselement 12 ist an einem Rohr 17 vorgesehen, das in dem Grundkörper 2 des Schafts 1 angeordnet ist. Das Rohr 17 lässt sich sowohl translatorisch, nämlich in Richtung der Längsachse A relativ zum Grundkörper 2 des Schafts 1 bewegen, als auch rotatorisch um die Längsachse A. Mittels der translatorischen Bewegung kann das Spreizen des Spreizkonus 15 und damit die Verlagerung der Raststifte 7 von einer vorstehenden Position in eine zurückgezogene Position bewirkt werden. Mit der rotatorischen Bewegung kann die am vorderen Ende des Konuselements 12 vorgesehene Kupplungshälfte 9 relativ zum Grundkörper 2 des Schafts 1 um die Längsachse A gedreht werden. Beim Ineinandergreifen der Kupplungshälften 9 und 10 wird diese Rotationsbewegung auch auf die Kupplungshälfte 10 des Manipulators 6 übertragen. An das Konuselement 12 schließt sich am breiteren Ende des Konuselements 13 ein zylinderförmiger Abschnitt an, der eine axiale Bewegung des Rohrs 17 relativ zu den Raststiften 7 erlaubt, ohne dass diese ihre radiale Lage ändern.

Fig. 2 und 3 zeigen ferner das Wirken des zweiten Griffs, der durch die hohlzylindrische Buchse 5 gebildet wird. Die Fig. 2 zeigt die Buchse 5 in einem zurückgezogenen Zustand. Die Fig. 3 zeigt die Buchse 5 in ihrer vorderen Position. An der Buchse 5 ist ein Mitnehmer 18 vorgesehen, der in einem Langloch 19 in dem Grundkörper 2 des Schafts 1 geführt wird. Das Langloch 19 erlaubt im Zusammenwirken mit dem Mitnehmer 18 eine translatorische Bewegung der Buchse 5 relativ zur Längsachse A des Schafts 1, begrenzt diese Bewegung jedoch zugleich durch das Anschlagen des Mitnehmers 18 an dem jeweiligen Ende des Langlochs 19. Wie der Vergleich der Fig. 3 (kein Kontakt) mit der Fig. 2 (Kontakt) zeigt, kann der Mitnehmer 18 durch die translatorische Bewegung der Buchse 5 entlang der Längsachse A in Kontakt mit einem Vorsprung 20 gebracht werden.

Der Vorsprung 20 ist auf der Außenoberfläche des Rohrs 17 vorgesehen und wird durch zwei Scheiben gebildet, die fest mit der Außenoberfläche des Rohrs 17 verbunden sind. Wie die Fig. 3 zeigt, weist der Vorsprung 20 eine Vorzugsposition auf. Diese Vorzugsposition nimmt er aufgrund einer Konuselement-Feder 21 ein. Die Konuselement-Feder 21 liegt auf der gegenüberliegenden Seite des Vorsprungs 20 mit einem ersten Ende an. Mit einem zweiten Ende liegt die Konuselement-Feder 21 an einem Anschlag 22 an, der von der Innenoberfläche des rohrförmigen Grundkörpers 2 nach innen ausgebildet ist. Dadurch ist die Konuselement-Feder 21 zwischen einem starren Fixpunkt am Grundkörper 2 (Anschlag 22) und einem Fixpunkt auf dem Rohr 17 (Vorsprung 20) wirksam und beeinflusst die Relativlage des Rohrs 17 relativ zum Grundkörper 2. Dabei ist die Vorzugslage des Rohrs 17 die in Fig. 3 dargestellte vorgeschobene Lage. Dadurch wird bewirkt, dass sich die Raststifte 7 in der Vorzugslage des Rohrs 17 in der in Fig. 3 dargestellten vorstehenden Position befinden. Dadurch wird sichergestellt, dass ohne das Einwirken externer Kräfte, die beispielsweise das Rohr 17 gegen die Konuselement-Feder 21 aus der Vorzugslage heraus zurückziehen, die Raststifte 7 stets in der vorstehenden Position und somit in Eingriff mit den Ausnehmungen 8 des Manipulators 6 sind. Damit ist die Vorzugslage diejenige, bei der der Manipulator 6 sicher mit dem Schaft 1 verbunden ist. Das vereinfacht ein Hantieren mit dem erfindungsgemäßen langschaftigen Werkzeug.

Wie der Vergleich der Fig. 2 mit der Fig. 3 zeigt, kommt der Mitnehmer 18, wenn er durch ein Zurückziehen der Buchse 5 entlang des Langlochs 19 bewegt wird, in Kontakt mit dem Vorsprung 20. Die Fig. 3 zeigt, dass in der Vorzugslage der Vorsprung 20 etwa in Mitte der Strecke angeordnet ist, die der Mitnehmer 18 von einem Ende des Langlochs 19 zum gegenüberliegenden Ende zurücklegen kann. Indem der Mitnehmer 18, nachdem er mit dem Vorsprung 20 in Kontakt gekommen ist, weiter bewegt wird, schiebt er den Vorsprung 20 und damit das Rohr 17 entlang der Längsachse A. Dabei wird die Feder 21 komprimiert, die Kupplungshälfte 9 in die Aufnahme 4 hineingezogen und die Raststifte 7 durch das Wirken der Raststift-Feder 16 nach innen gezogen, wie dies in der Fig. 2 dargestellt ist, die die Endlage des Mitnehmers 18 im Langloch 19 darstellt.

Das Vorsehen der Buchse 5 benachbart der Aufnahme 4 bietet den Vorteil, dass das Verbinden des Schafts 1 mit dem Manipulator 6 einfach durchgeführt werden kann. Das zweite Ende des Schafts 1 kann gegriffen werden und das Zurückziehen der Raststifte 7 durch ein Bewegen der Buchse 5 am zweiten Ende des Schafts 1 bewirkt werden. Die Aufnahme 4 kann in die Halterung 11 des Manipulators 6 durch Handhaben des Schafts 1 am zweiten Ende durchgeführt werden. Das ist insbesondere bei besonders langen Grundkörpern 2 des Schafts 1 von Vorteil.

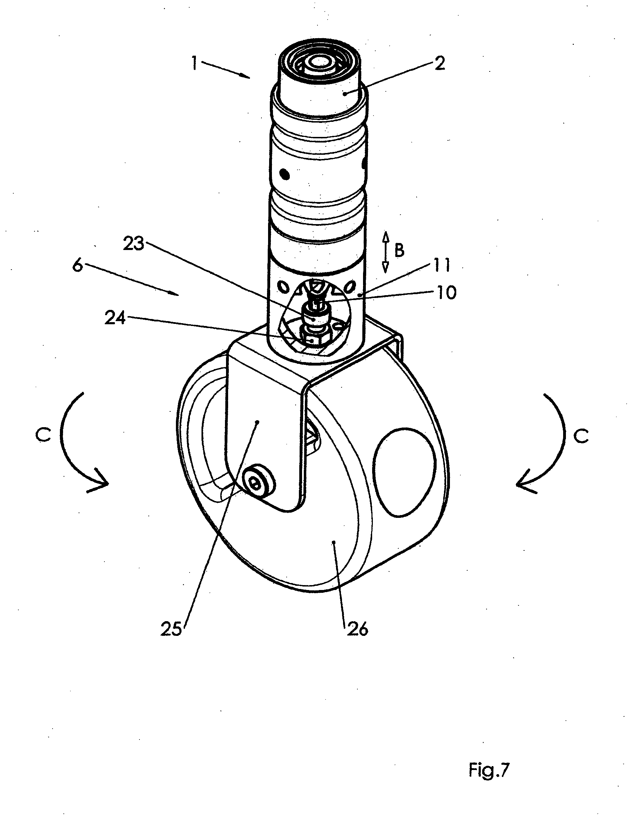

Fig. 3 zeigt den Manipulator 6 in der Situation, in der er von der Aufnahme 4 aufgenommen wird. Dabei zeigt die Fig. 3, dass die Kupplungshälfte 9 der Aufnahme 4 in die Kupplungshälfte 10 des Manipulators 6 eingreift. Fig. 3 zeigt eine erste Ausführungsform eines Manipulators 6. Bei dieser Ausführungsform ist die Kupplungshälfte 10 des Manipulators 6 an einer Schraube 23 ausgeführt, die in einem Gewinde 24 eines starren Teils 25 des Manipulators 6 ausgeführt ist. Durch Drehen des Rohrs 17 und damit der Kupplungshälfte 9 der Aufnahme 4 kann die Kupplungshälfte 10 des Manipulators 6 gedreht werden und dadurch die Lage der Schraube 23 innerhalb des Gewindes 24 geändert werden. Diese Lageänderung kann zum Klemmen einer in Fig. 3 teilweise dargestellten Scheibe 26 verwendet werden. Die Scheibe 26 ist (vgl. Fig. 7 bis 10) in dem feststehenden Teil 25 des Manipulators 6 drehbar gelagert. Wird die Schraube 23 auf die Scheibe 26 zugestellt, so kann sie die Rotationslage der Scheibe 26 relativ zum feststehenden Teil 25 des Manipulators 6 festlegen. Wird die Schraube 23 zurückgeschraubt, so gibt sie die Scheibe 26 frei. Das damit möglich gewordene Einstellen der Relativlage der Scheibe 26 relativ zum feststehenden Teil 25 des Manipulators 6 kann dazu verwendet werden, um die Lage von Werkzeugen relativ zum feststehenden Teil 25 des Manipulators 6 und damit auch relativ zum Schaft 1 einzustellen, wie dies im Kontext der Fig. 7 bis 10 näher erläutert wird.

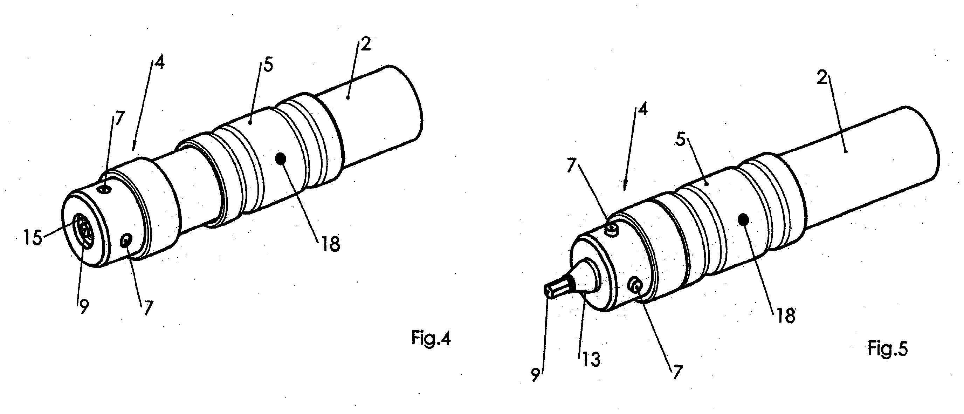

Die Fig. 4 und 5 zeigen in perspektivischer Ansicht das zweite Ende des Schafts mit den Raststiften in zurückgezogener Position (Fig. 4) und in der vorstehenden Position (Fig. 5). Im Vergleich der Fig. 4 mit der Fig. 5 sieht man auch die Buchse 5 in ihrer zurückgezogenen Position, also der Position vergleichbar der in Fig. 2 dargestellten, und ihrer vorgeschobenen Position (der Position vergleichbar der Darstellung in Fig. 3). Ferner sieht man, dass durch das Verschieben der Buchse 5 das von dem Rohr 17 getragenen Konusteil 12 von einer zurückgezogenen Position (Fig. 4) in eine vorgeschobenen Vorzugslage (Fig. 5) gelangt. Dadurch gelangt auch die Kupplungshälfte 9 der Aufnahme 4 in eine vorgeschobene Position, in der sie mit einer Kupplungshälfte 10 des Manipulators 6 in Eingriff kommen kann. Ferner sieht man, wie durch die Verlagerung des Rohrs 17 und dem damit verbundenen Konuselement 12 die Raststifte 7 von der zurückgezogenen Position (Fig. 4) in die vorstehende Position (Fig. 5) verlagert werden können.

Die Fig. 6 zeigt das erste Ende des Schafts 1. Dort ist der Grundkörper 2 des Schafts 1 dargestellt, der sich von dem in Fig. 6 dargestellten ersten Ende bis zu dem in den Fig. 2 und 3 dargestellten zweiten Ende des Schafts 1 erstreckt. Ferner ist ein Ende des Rohrs 17 dargestellt. Das Rohr 17 erstreckt sich von dem in Fig. 6 dargestellten ersten Ende des Schafts 1 zu dem in den Fig. 2 und 3 dargestellten zweiten Ende des Schafts 1. Am ersten Ende des Grundkörpers 2 ist in Form einer Endkappe mit mittiger Durchgangsbohrung eine Führung 27 für das Rohr 17 vorgesehen.

Die Fig. 6 zeigt ferner, dass der Griff 3 in Form eines T-Stücks am Ende des Rohrs 17 angeordnet ist. Schließlich zeigt die Fig. 6 einen Rastbolzen 28, der in eine Rastnut 30 eingreifen kann. Damit kann die relative Lage des Rohrs 17 relativ zum Grundkörper 2 in Richtung der Längsachse A festgelegt werden. Die Rastnut 30 kann umlaufend ausgebildet sein, so dass ein Einrasten des Rastbolzens 28 in die Rastnut 30 unabhängig von der jeweiligen Rotationslage des Rohrs 17 relativ zum Rastbolzen 28 erfolgen kann. Zudem erlaubt es das Vorsehen einer umlaufenden Rastnut, dass das Rohr 17 trotz Einrasten des Rastbolzens 28 in einer die Rastnut 30 relativ zum Grundkörper 2 gedreht werden kann, womit auch die Kupplungshälfte 9 der Aufnahme 4 relativ zum Grundkörper 2 gedreht werden kann.

Die Fig. 7 zeigt eine erste Ausführungsform eines Manipulators, dessen hohlzylindrischer Abschnitt 11 auf die Aufnahme 4 eines Schafts 1 aufgeschoben ist. Dargestellt ist die Ausführungsform des Manipulators 6, wie sie auch in Fig. 3 teilweise dargestellt wird. Der Manipulator 6 weist einen feststehenden Teil 25 auf. In dem feststehenden Teil 25 ist eine Scheibe 26 drehbar gelagert. Ferner ist in dem feststehenden Teil 25 eine Gewindehülse 24 fest vorgesehen. In der Gewindehülse 24 steckt eine Schraube 23, an der die Kupplungshälfte 10 des Manipulators 6 ausgeführt ist. Durch Ein- und Ausdrehen der Schraube 23 wird die Lage der Schraube 23 in Richtung des Doppelpfeils B verändert. Je nach Lage der Schraube 23 relativ zur Scheibe 26 ist diese für eine Rotation in Richtung der Pfeile C freigegeben oder wird durch die Interaktion der Spitze der Schraube 23 mit der Außenoberfläche der Scheibe 26 an einer Rotation gehindert.

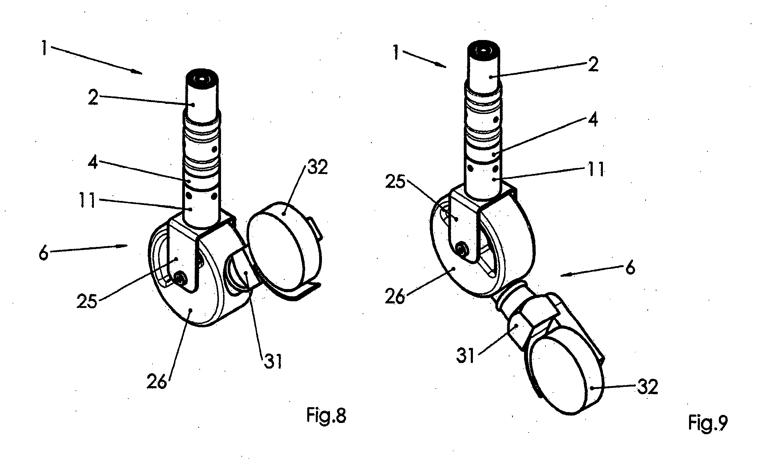

In den Fig. 8 und 9 wird eine erste Weiterbildung der in der Fig. 7 dargestellten ersten Bauform eines Manipulators 6 dargestellt. In dieser ersten Weiterbildung wird an der Scheibe 26 über eine Halterung 31 eine scheibenförmige Bürste 32 gehalten. Die scheibenförmige Bürste 32 kann um eine Rotationsachse drehen, die von der Halterung 31 gehalten wird. Wie aus dem Vergleich der Fig. 8 und 9 ersichtlich, kann durch das vorstehend beschriebene Einstellen der Relativlage der Scheibe 26 relativ zum feststehenden Teil 25 des Manipulators 6 die Ausrichtung der Bürste 32 geändert werden. Die in Fig. 8 dargestellte Ausrichtung kann beispielsweise genutzt werden, um ein Rohr von unten zu reinigen, beispielsweise an der Unterseite des Rohrs anbackendes Erdreich abzubürsten. Die in Fig. 9 dargestellte Ausrichtung der Bürste 32 kann beispielsweise dazu verwendet werden, um Erdreich zu entfernen, das an der Oberseite eines Rohrs anbackt. Die Halterung 31 kann dabei einen (nicht näher dargestellten) Rotationsantrieb für die Bürste 32 aufweisen, beispielsweise einen pneumatischen Antrieb.

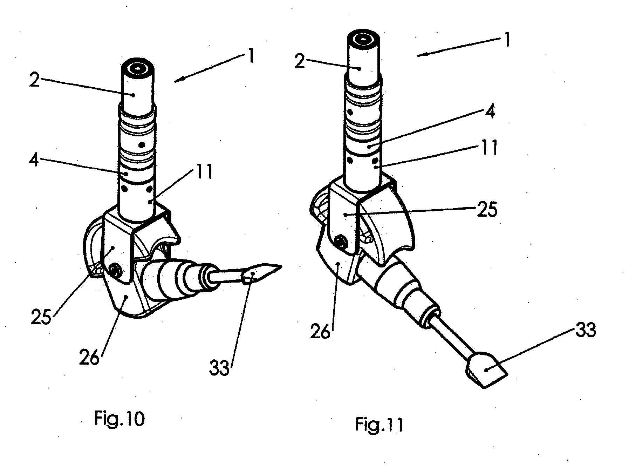

Die Fig. 10 und 11 zeigen - in vergleichbaren Ansichten zu denen der Fig. 8 und 9 - eine zweite Weiterbildung der in Fig. 7 dargestellten ersten Bauform eines Manipulators 6. In der in den Fig. 10 und 11 dargestellten Weiterbildung ist an der Scheibe 26 keine Bürste, sondern ein Meißel 33 vorgesehen. Im Vergleich der Fig. 10 und 11 zeigt sich wiederum, wie die vorstehend beschriebene Möglichkeit des Festlegens unterschiedlicher Positionen der Scheibe 26 relativ zum feststehenden Teil 25 dazu genutzt werden kann, die Ausrichtung des Meißels 33 zu ändern, um damit beispielsweise das Bearbeiten eines Rohrs von unten (Fig. 10) und von oben (Fig. 11) zu ermöglichen. Die Halterung 31 kann dabei einen (nicht näher dargestellten) Linearantrieb oder Schlagantrieb für den Meißel 33 aufweisen, beispielsweise einen pneumatischen Antrieb.

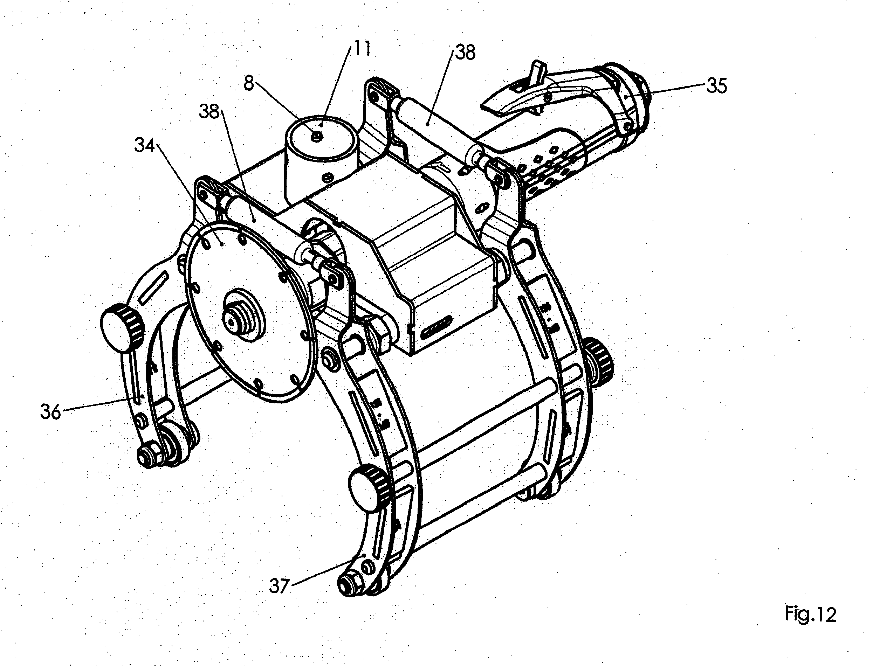

Die Fig. 12 zeigt eine zweite Bauform eines Manipulators in perspektivischen Ansichten.

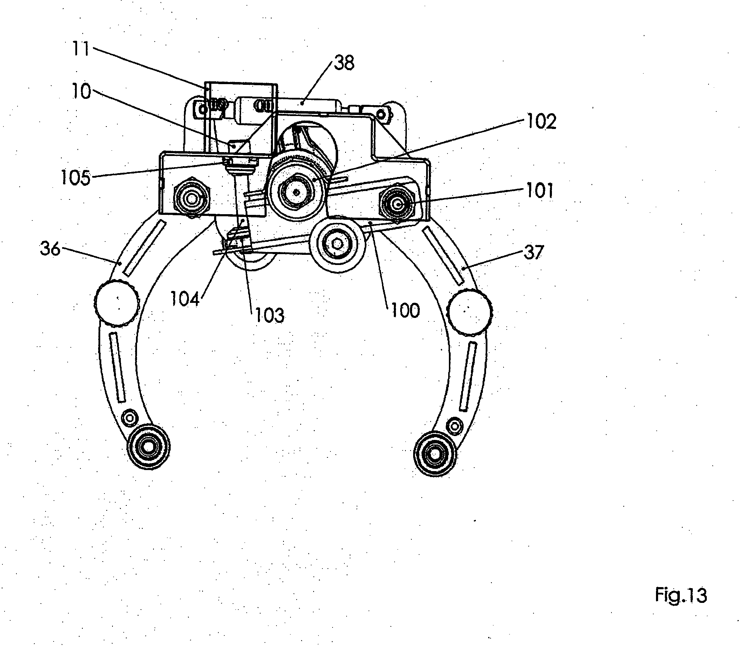

Der in den Fig. 12 dargestellte Manipulator 6 ist ein Schneidwerkzeug. Er weist eine scheibenförmige Schneide 34 und einen Antrieb 35 auf, der die Schneide 34 drehend antreiben kann. Der Manipulator Backen 36, 37 auf, die über Gasdruckfedern 38 in die in Fig. 12 und 13 gezeigte Position vorgespannt sind und aus dieser Position durch Spreizen der Backen 36,37 gegen die Vorspannkraft der Gasdruckfedern 38 ein Rohr mit größerem, als der zwischen den Backen in der Darstellung der Fig. 12 dargestellten Durchmesser umgreifen können und sich an diesem Rohr festklemmen können.

Die Schneide 34 kann über eine Drehung der Kupplungshälfte 10 des Manipulators 11 auf das Rohr zugestellt werden. Hierzu ist an dem Manipulator 10 eine Wippe 100 vorgesehen, die in einem festen Drehpunkt 101 gelagert ist. An der Wippe 100 ist die Aufnahme 102 für die Schneide vorgesehen. Die Schneide 34 ist in der Darstellung der Fig. 13 nicht dargestellt, um die Ansicht der Wippe 100 zu verbessern. An dem dem Drehpunkt 101 gegenüberliegenden Ende weist die Wippe 100 ein Gelenklager 103 auf, in das ein Bolzen 104 mit einem Gewinde eingereift. Der Bolzen 104 durchgreift ein Gelenklager 105 mit Durchgangsbohrung. Der Kopf des Bolzens 104 bildet die Kupplungshälfte 10 des Manipulators 11 aus. Eine Drehung der Kupplungshälfte 10 bewirkt eine Drehung des Bolzens 104 und damit eine Veränderung des Abstands des Gelenklagers 103 gegenüber der Kupplungshälfte 10. Durch die Veränderung dieses Abstands wird die Wippe 100 um den Drehpunkt 101 geschwenkt und damit die Lage der von der Aufnahme 102 getragenen Schneide 34 relativ zu dem (nicht dargestellten) Rohr verändert.

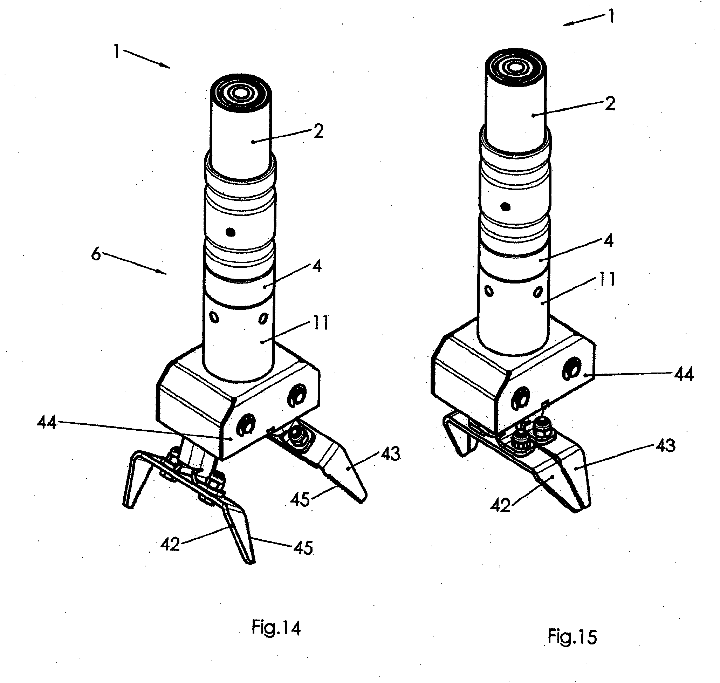

Die Fig. 14, 15 und 16 zeigen eine vierte Bauform eines Manipulators 6. Diese Bauform dient als Greifer. Der Manipulator 6 weist zwei einander gegenüberliegend angeordnete Greifbacken 42, 43 auf. Diese sind jeweils schwenkbar in einem feststehenden Teil 44 des Manipulators 6 gelagert. Dabei zeigt die Fig. 14 die Greifbacken 42, 43 in einer geöffneten Position und die Fig. 15 die Greifbacken 42, 43 in der geschlossenen Position. Insbesondere der Fig. 14 ist zu entnehmen, dass die Greifbacken 42, 43 für besondere Funktionen ausgebildet sein können. So kann im vorderen Teil der Greifbacken ein Sägezahnprofil 45 oder eine Schneide vorgesehen sein. Im hinteren Bereich der Backen 42, 43 können halbkreisförmige Ausnehmungen alternativ oder zusätzlich vorgesehen sein, die beim Schließen der Backen 42 und 43 sich zu einem im wesentlichen runden Loch ergänzen.

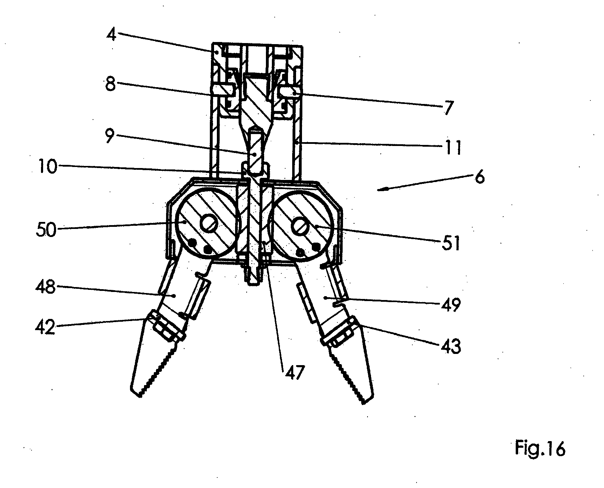

Die teilweise durchsichtig ausgeführte Darstellung der Fig. 16 zeigt, dass die Kupplungshälfte 10 des Manipulators 6 mit einer Walze 47 eines Schneckengetriebes verbunden ist. Die Backen 42, 43 sind mit Armen 48, 49 verbunden, die an ihren Enden Schneckenräder 50, 51 aufweisen, die mit der Walze 47 zusammenwirken können. Es ist ersichtlich, dass durch ein Drehen des Rohrs 17 und damit der Kupplungshälfte 9 der Aufnahme 4 durch das Ineinandergreifen der Kupplungshälften 9 und 10 eine Rotation der Kupplungshälfte 10 des Manipulators 6 bewirkt werden kann. Die Rotation der Kupplungshälfte 10 des Manipulators 6 führt zu einer Rotation der Walze 47, die über das von ihr mit den Schneckenräder 50, 51 gebildete Schneckengetriebe eine Zustellbewegung der Backen 42, 43 aufeinander zu bewirkt. Durch den Rotationswinkel, um den das Rohr 17 gedreht wird, kann somit die relative Lage der Backen 42, 43 zueinander eingestellt werden. Die Backen 42, 43 können austauschbare Elemente sein, die mit Hilfe der in den Fig. 14 bis 16 dargestellten Schrauben mit einem Winkelfortsatz des jeweiligen Arms 48, 49 verbunden werden kann.

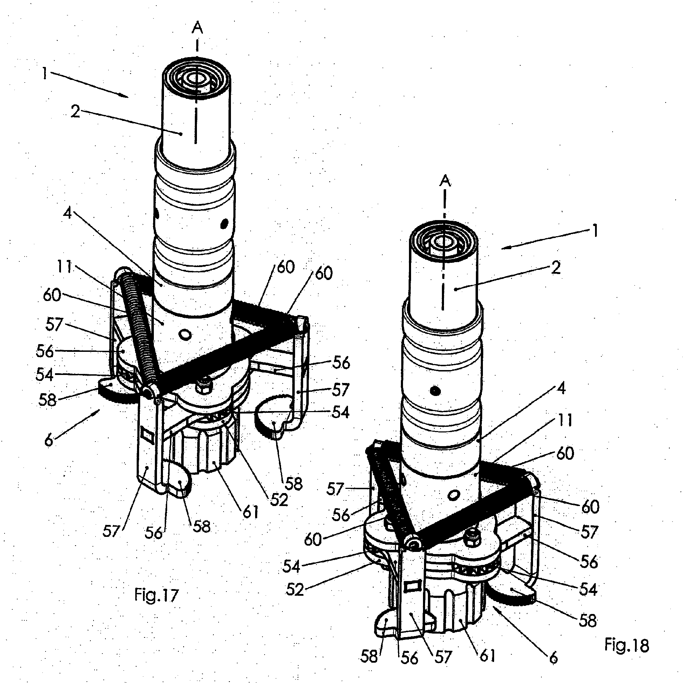

Die Fig. 17, 18 und 19 zeigen eine fünfte Ausführungsform eines Manipulators 6. Dieser weist einen feststehenden Teil 52 auf. An diesem feststehenden Teil 52 sind drei Achsen 53 vorgesehen, die jeweils eine Bohrung eines eine Verzahnung 54 aufweisenden Kopfes 55 eines Arms 56 durchgreifen. An dem Arm 56 ist jeweils ein rechtwinklig zu dem Arm 56 verlaufender Greifarm 57 mit einem Greifkopf 58 verbunden. Die Verzahnung 54 der Köpfe 55 greift in eine Verzahnung 59 ein, die über eine Welle mit der Kupplungshälfte 10 des Manipulators 6 verbunden ist. Eine Drehung der Kupplungshälfte 10 um die Längsachse A bewirkt somit eine Drehung der Verzahnung 59 um die Achse A. Wie der Vergleich der Fig. 17 und 18 zeigt, führt eine Drehung der Verzahnung 59 um die Längsachse A zu einer Drehung der Arme 56 um die Achse 53. Dadurch kann die relative Lage der Greifköpfe 58 in Bezug auf die Längsachse A geändert werden. Bei nahezu radial verlaufenden Armen 56 sind die Greifköpfe 58 weiter beabstandet von der Längsachse A (vgl. Fig. 17) als in einer Winkelstellungen der Arme 56, die nicht radial zur Längsachse A verlaufen (vgl. Fig. 18). Damit kann die vierte Bauform des Manipulators 6 als Greifer verwendet werden, um Verschlusskappen, wie beispielsweise die in den Fig. 17 bis 19 dargestellte Verschlusskappe 61, zu ergreifen und aufzudrehen.

Die Ausrichtung der Greifköpfe 58 kann auch so geändert werden, dass in einer ersten Stellung eine Kappe gelöst und in einer anderen Stellung die Kappe angezogen werden kann. Hierzu werden die Greifköpfe in einem Zustand, in dem der Manipulator noch entfernt von der Verschlusskappe 61 gehalten wird, von der in Fig. 18 dargestellten, in Uhrzeigersinn weisenden Ausrichtung durch Drehen der Kupplungshälfte 10 und die damit bewirkte Schwenkbewegung der Arme 56 über den in Fig. 17 dargestellten Totpunkt hinaus in eine im Gegenuhrzeigersinn weisende Ausrichtung gebracht.

In den Fig. 17 bis 19 sind Federn 60 dargestellt, die die oberen Enden der Greifarme 57 in Richtung auf die Längsachse A vorspannen und dem in Fig. 18 dargestellten Zustand dadurch einen Vorzug relativ zu dem in Fig. 17 dargestellten Zustand geben.

Die Fig. 17 bis 19 zeigen Ausführungsformen des Schafts 1 ohne als Buchse 5 ausgebildeten, zur Aufnahme 4 benachbart angeordneten zweiten Griff.

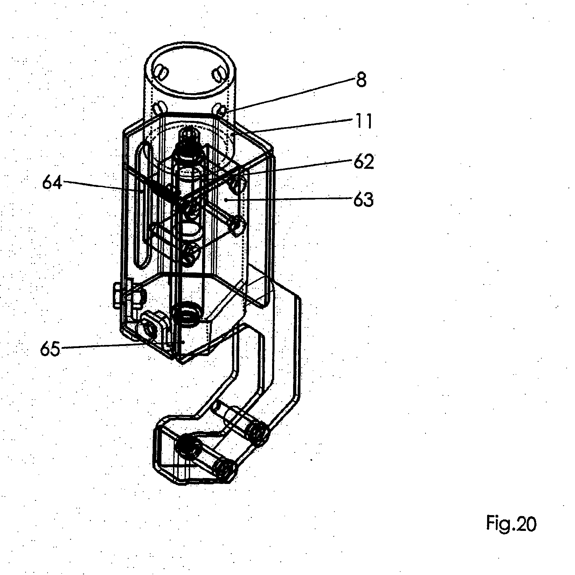

Bei der in Fig. 20 dargestellten Ausführungsform führt die Drehung der (nicht dargestellten) Kupplungshälfte in der Halterung 11 des Manipulators zu einer Drehung einer nur schematisch dargestellten Spindel 62. Diese wirkt mit einer Verzahnung in einem Schlitten 63 zusammen. Der Schlitten 63 ist in einer Linearführung 64 geführt, so dass eine Drehung der Spindel 62 in eine lineare Bewegung des Schlittens 63 entlang der Linearführung 64 übersetzt wird. Dadurch kann eine lineare Zustellbewegung eines mit dem Schlitten verbundenen Schneidmessers 65 bewirkt werden.

## Patentansprüche

1. Langschaftiges Werkzeug mit einem sich entlang einer Längsachse (A) erstreckenden Schaft (1) und einem Griff (3) an einem ersten Ende des Schafts (1) und einem dem ersten Ende gegenüberliegenden zweiten Ende mit einer Aufnahme (4) für einen Manipulator (6), wobei die Aufnahme (4) einen zum Eingriff mit einer Ausnehmung (8) des Manipulators (6) vorgesehenen, vorstehenden Raststift (7) aufweist, der aus der vorstehenden Position in eine zurückgezogene Position bewegt werden kann, und die Aufnahme (4) eine Kupplungshälfte (9) zum Kuppeln mit einer Kupplungshälfte (10) des Manipulators (6) aufweist, wobei der Raststift (7) zur Einnahme der zurückgezogenen Position radial in Bezug auf die Längsachse (A) bewegt wird und ein Konuselement (12) vorgesehen ist, dessen Konusfläche (13) in Kontakt mit einem Ende des Raststifts (7) oder in Kontakt mit einer Raststiftaufnahme (14) gebracht werden kann, die ein Ende des Raststifts (7) aufnimmt, und ein Gleiten des Endes des Raststifts (7) bzw. der Raststiftaufnahme (14) entlang der Konusfläche (13) eine Änderung der radialen Position des Raststifts (7) relativ zur Längsachse (A) bewirkt, wobei das Konuselement (12) an einem Rohr (17) vorgesehen ist, das in einem Grundkörper (2) des Schafts (1) angeordnet ist, oder an einem Stab vorgesehen ist, der in dem Grundkörper (2) angeordnet ist, **dadurch gekennzeichnet, dass** die Kupplungshälfte (9) Aufnahme (4) drehbar relativ zu dem Grundkörper (2) des Schafts (1) ist und die Kupplungshälfte (9) an dem Konuselement (12) ausgebildet ist.

2. Werkzeug nach Anspruch 1, **gekennzeichnet durch** eine Konuselement-Feder (21), die gespannt wird, wenn das Konuselement (12) aus einer Vorzugslage in eine andere Lage bewegt wird.

3. Werkzeug nach Anspruch 1, **gekennzeichnet durch** eine Grifffläche am ersten Ende, durch deren Bewegen das Rohr (17) bzw. der Stab innerhalb des Grundkörpers (2) translatorisch oder rotatorisch bewegt werden kann.

4. Werkzeug nach Anspruch 1 oder 3, **gekennzeichnet durch** eine Grifffläche am zweiten Ende, durch deren Bewegen das Rohr (17) bzw. der Stab innerhalb des Grundkörpers (2) translatorisch oder rotatorisch bewegt werden kann.

5. Werkzeug nach einem der Ansprüche 1 bis 4, **gekennzeichnet durch** eine Raststift-Feder (16), die gespannt wird, wenn der Raststift (7) aus einer Vorzugslage in eine andere Lage bewegt wird.

6. Werkzeug nach einem der Ansprüche 1 bis 5, **dadurch gekennzeichnet, dass** die Kupplungshälfte (9) translatorisch relativ zum Grundkörper (2) bewegt werden kann.

7. Werkzeug nach einem der Ansprüche 1 bis 6, **gekennzeichnet durch** einen Manipulator (6) mit einer Kupplungshälfte (10), die in die Kupplungshälfte (9) der Aufnahme (4) eingreift, oder in die die Kupplungshälfte (9) der Aufnahme (4) eingreift, wenn der Manipulator (6) von der Aufnahme (4) aufgenommen wird, und mit einer Manipulationsfläche und einem Getriebe, das die Rotationsbewegung der Kupplungshälfte (10) um eine Rotationsachse in eine Rotationsbewegung der Manipulationsfläche um eine andere Rotationsachse wandelt.

8. System aus einem langschaftigen Werkzeug nach einem der Ansprüche 1 bis 7 mit einem ersten Manipulator (6) und einem zweiten Manipulator (6), wobei in einem ersten Systemzustand der erste Manipulator (6) von der Aufnahme (4) aufgenommen wird und in einem zweiten Systemzustand der zweite Manipulator (6) anstelle des ersten Manipulators (6) von der Aufnahme (4) aufgenommen wird.

9. Verwendung eines Werkzeugs nach einem der Ansprüche 1 bis 7 oder eines Systems nach Anspruch 8 zum Bearbeiten einer in einer Grube befindlichen Rohrleitung von der Erdoberfläche aus.

## Claims

1. Long-shaft tool comprising a shaft (1) extending along a longitudinal axis (A) and having a handle (3) at a first end of the shaft (1) and a second end opposite the first end with a holder (4) for a manipulator (6), wherein the holder (4) has a projecting latch pin (7) provided for engagement with a recess (8) in the manipulator (6), which latch pin can be moved from the projecting position into a retracted position, and the holder (4) has a coupling half (9) for coupling with a coupling half (10) of the manipulator (6), wherein the latch pin (7) is moved radially in relation to the longitudinal axis (A) to adopt the retracted position and a cone element (12) is provided, the cone surface (13) of which can be brought into contact with one end of the latch pin (7) or into contact with one latch pin holder (14) which receives one end of the latch pin (7), and a sliding of the end of the latch pin (7) or the latch pin holder (14), respectively, along the cone surface (13) brings about a change in the radial position of the latch pin (7) relative to the longitudinal axis (A), wherein the cone element (12) is provided on a pipe (17) which is arranged in a base body (2) of the shaft (1), or is provided on a rod which is arranged in the base body (2), **characterized in that** the coupling half (9) of the holder (4) is rotatable relative to the base body (2) of the shaft (1) and the coupling half (9) is formed on the cone element (12).

2. Tool according to claim 1, **characterized by** a cone element spring (21) which is tensioned when the cone element (12) is moved from a preferred position into a different position.

3. Tool according to claim 1, **characterized by** a handle surface at the first end, through the movement of which the pipe (17) or the rod, respectively, can be moved translationally or rotationally within the base body (2).

4. Tool according to claim 1 or 3, **characterized by** a handle surface at the second end, through the movement of which the pipe (17) or the rod, respectively, can be moved translationally or rotationally within the base body (2).

5. Tool according to one of claims 1 to 4, **characterized by** a latch pin spring (16), which is tensioned when the latch pin (7) is moved from a preferred position into a different position.

6. Tool according to one of claims 1 to 5, **characterized in that** the coupling half (9) can be moved translationally relative to the base body (2).

7. Tool according to one of claims 1 to 6, **characterized by** a manipulator (6) having a coupling half (10) which engages with the coupling half (9) of the holder (4), or with which the coupling half (9) of the holder (4) engages when the manipulator (6) is received by the holder (4) and having a manipulation surface and a gear which converts the rotational movement of the coupling half (10) about an axis of rotation into a rotational movement of the manipulation surface about a different axis of rotation.

8. System containing a long-shaft tool according to one of claims 1 to 7 having a first manipulator (6) and a second manipulator (6), wherein in a first system state the first manipulator (6) is received by the holder (4) and in a second system state the second manipulator (6) instead of the first manipulator (6) is received by the holder (4).

9. Use of a tool according to one of claims 1 to 7 or of a system according to claim 8 for machining a pipeline located in a trench from the ground surface.

## Revendications

1. Outil à long manche avec un manche (1) s'étendant le long d'un axe longitudinal (A) et une poignée (3) à une première extrémité du manche (1) et à une deuxième extrémité à l'opposé de la première extrémité avec un support (4) pour un manipulateur (6), le support (4) présentant un ergot d'encliquetage (7) en saillie prévu pour un engagement avec un évidement (8) du manipulateur (6), qui peut être déplacé de la position en saillie dans une position en retrait, et le support (4) présentant un demi-accouplement (9) pour l'accouplement avec un demi-accouplement (10) du manipulateur (6), l'ergot d'encliquetage (7) étant déplacé radialement par rapport à l'axe longitudinal (A) pour prendre la position en retrait et un élément conique (12) étant prévu, dont la surface conique (13) peut être mise en contact avec une extrémité de l'ergot d'encliquetage (7) ou en contact avec un support d'ergot d'encliquetage (14), qui supporte une extrémité de l'ergot d'encliquetage (7), et un glissement de l'extrémité de l'ergot d'encliquetage (7) ou du support d'ergot d'encliquetage (14) le long de la surface conique (13) provoquant le changement de la position radiale de l'ergot d'encliquetage (7) par rapport à l'axe longitudinal (A), l'élément conique (12) étant prévu sur un tube (17) qui est disposé dans un corps de base (2) du manche (1), ou prévu sur une tige qui est disposée dans le corps de base (2), **caractérisé en ce que** le demi-accouplement (9) du support (4) est configuré pour tourner par rapport au corps de base (2) du manche (1) et le demi-accouplement (9) est formé sur l'élément conique (12).

2. Outil selon la revendication 1, **caractérisé par** un ressort d'élément conique (21), qui est tendu lorsque l'élément conique (12) est déplacé d'une position préférentielle dans une autre position.

3. Outil selon la revendication 1, **caractérisé par** une surface de poignée sur la première extrémité, grâce au mouvement de laquelle le tube (17) ou la tige peut être déplacé en translation ou en rotation à l'intérieur du corps de base (2).

4. Outil selon la revendication 1 ou 3, **caractérisé par** une surface de poignée sur la deuxième extrémité, grâce au mouvement de laquelle le tube (17) ou la tige peut être déplacé en translation ou en rotation à l'intérieur du corps de base (2).

5. Outil selon l'une des revendications 1 à 4, **caractérisé par** un ressort d'élément conique (16), qui est tendu lorsque l'ergot d'encliquetage (7) est déplacé d'une position préférentielle dans une autre position.

6. Outil selon l'une des revendications 1 à 5, **caractérisé en ce que** le demi-accouplement (9) peut être déplace en translation par rapport au corps de base (2).

7. Outil selon l'une des revendications 1 à 6, **caractérisé par** un manipulateur (6) avec un demi-accouplement (10), qui s'engage dans le demi-accouplement (9) du support (4) ou dans lequel s'engage le demi-accouplement (9) du support (4) lorsque le manipulateur (6) est logé dans le support (4), et avec une surface de manipulation et une transmission qui convertit le mouvement de rotation du demi-accouplement (10) autour d'un axe de rotation en un mouvement de rotation de la surface de manipulation autour d'un autre axe de rotation.

8. Système constitué d'un outil à long manche selon l'une des revendications 1 à 7 avec un premier manipulateur (6) et un deuxième manipulateur (6), le premier manipulateur (6) étant logé dans le support (4) dans un premier état du système et le deuxième manipulateur (6) étant logé dans le support (4) à la place du premier manipulateur (6) dans un deuxième état du système.

9. Utilisation d'un outil selon l'une des revendications 1 à 7 ou d'un système selon la revendication 8 pour le traitement depuis la surface terrestre d'une conduite se trouvant dans une fosse.
